# EUROPÄISCHE PATENTANMELDUNG

(11) **EP 4 429 140 A1**
(43) Veröffentlichungstag der Anmeldung: **11.09.2024**
(21) Anmeldenummer: 24162343.8
(22) Anmeldetag: 08.03.2024
(51) Int. Cl.: H04L 1/00

(54) **TRANSCEIVER SOWIE BETRIEBSVERFAHREN**

(30) Priorität: 10.03.2023 DE 102023202208; 11.08.2023 DE 102023207765
(71) Anmelder: Fraunhofer-Gesellschaft zur Förderung der angewandten Forschung e.V., 80686 München (DE)
(72) Erfinder: HUPP, Jürgen, 91058 Erlangen (DE); HAALA, Oliver, 91058 Erlangen (DE); DRÄGER, Tobias, 91058 Erlangen (DE); BERNHARD, Josef, 91058 Erlangen (DE)
(74) Vertreter: Zinkler, Franz

(57) **Zusammenfassung**

Transceiver, der ausgebildet ist, mindestens ein Source-Paket (12) gesplittet und codiert zu übertragen, mit folgenden Merkmalen: einem Splitter, der ausgebildet ist, das mindestens eine Source-Paket (12) in mehrere Source-Segmente (S0, S1, S2) aufzuteilen; einem Codierer (14), der ausgebildet ist, die mehreren Source-Segmente (S0, S1, S2) per Codiervorschrift zu codieren, um codierte Segmente (CS0, CS1, CS2, CS3, CS4, CS5) zu erhalten; einem Sender (16), der ausgebildet ist, die codierten Segmente als PHY-Pakete mittels einer Mehrzahl von Cyclen (C1, C2) mit jeweils einer Mehrzahl an Subcyclen (SC1, SC2, SC3) zu übertragen, wobei jeder Subcycle (SC1, SC2, SC3) mehrere Slots (SL1, SL2, SL3, SL4, SL5, SL6, SL7, SL8) aufweist; wobei die Codiervorschrift ein Übermitteln der Mehrzahl von Source-Segmente (S0, S1, S2) mittels Vorwärts-Fehler-Korrektur vorgibt und wobei die Codiervor-schrift eine Reihenfolge derart vorgibt, dass ein Codiergrad der codierten Segmente (CS0, CS1, CS2, CS3, CS4, CS5), die im letzten PHY-Paket übertragen wer-den, reduziert oder auf Codiergrad 1 reduziert ist.

## Beschreibung

Ausführungsbeispiele der vorliegenden Erfindung beziehen sich auf einen Transceiver, z. B. auf einen Transceiver zum Einsatz als Sensor und/oder Aktorknoten bzw. Masterknoten. Ein Ausführungsbeispiel bezieht sich auf einen Transceiver als Sender, ein weiteres Ausführungsbeispiel bezieht sich auf einen weiteren Transceiver als Empfänger sowie auf die entsprechenden Verfahren und computerimplementierten Verfahren. Im Allgemeinen liegt die Erfindung auf dem Gebiet von deterministischer Datenübertragung unter Verwendung von Cyclen und Subcyclen in der Kombination mit Codierern.

Ein Vertreter einer deterministischen Datenübertragung ist IO-Link-Wireless, das mit W-Cyclen und W-Subcyclen eine drahtlose Datenübertragung ermöglicht. IO-Link-Wireless definiert 5 parallele Tracks mit je bis zu 8 Slots und mehreren Devices. Hierdurch können bis zu 40 Devices bzw. 20 Devices in DSlots eingesetzt werden. Ein W-Cycle hat beispielsweise eine Länge von ca. 5 ms und ist unterteilt in 3 W-Subcycles. Pro W-Subcycle steht beispielsweise 1 Downlink-Slot und bis zu 8 Uplink-Slots zur Verfügung. IO-Link-Wireless verwendet darüber hinaus auch noch Frequencyhopping, d. h. also, dass von W-Subcycle zu W-Subcycle die Frequenzbereiche sich verschieben, wobei auch je W-Subcycle unterschiedliche Frequenzen eingesetzt werden. Diese werden als W-Tracks bezeichnet (Definition nach IOLW Spec: W-Track: "physically wireless transmission track comprising a (small band) transceiver with its own antenna and dedicated frequency channels for transmitting the messages between W-Master and W-Device by W-Frames").

Für die Schaffung einer ausreichenden Zuverlässigkeit setzt IO-Link-Wireless beispielsweise auf einen an ARQ angelehnten Prozess mit ACK und NACK. Das ACK (acknowledgment, engl. für Bestätigung, Erhalt) und das NACK (non-acknowledgment, engl. für Nichterhalten) führt zu Verzögerungen, da der Sender erst auf die Rückmeldung warten muss, um auf die Rückmeldung (NACK oder ACK) zu reagieren. Das führt ausgehend von der festen Zugriffszeit zu Verzögerungen und auch zur Reduzierung der Datenrate aufgrund der verstrichenen Zykluszeit bis zur Wiederholübertragung. Deshalb besteht der Bedarf nach einem verbesserten Ansatz.

Aufgabe der vorliegenden Erfindung ist es, ein Konzept zur deterministischen Übertragung zu schaffen, das einen verbesserten Kompromiss aus Übertragungsrate und Zuverlässigkeit sowie Latenz bietet.

Die Aufgabe wird durch den Gegenstand der unabhängigen Patentansprüche gelöst.

Ausführungsbeispiele der vorliegenden Erfindung schaffen einen Transceiver, der ausgebildet ist, mindestens ein Source-Paket gesplittet und codiert zu übertragen. Der Transceiver umfasst hierzu einen Splitter, einen Codierer sowie einen Sender. Der Splitter ist ausgebildet, das mindestens eine Source-Paket in mehrere Source-Segmente aufzuteilen. Der Codierer ist ausgebildet, die mehreren Source-Segmente per Codiervorschrift zu codieren, um codierte Segmente zu erhalten. Der Sender ist ausgebildet, die codierten Segmente als PHY-Pakete (physikalische Pakete) mittels einer Mehrzahl von Cyclen mit jeweils einer Mehrzahl von Subcyclen zu übertragen, wobei jeder Subcycle mehrere Slots aufweist. Die Codiervorschrift gibt ein Übermitteln der Mehrzahl von Source-Segmenten mittels Vorwärts-Fehler-Korrektur (forward error correction) vor, wobei hierbei auch eine Reihe derart vorgegeben wird, dass ein Codiergrad der codierten Segmente, die im letzten PHY-Paket übertragen werden, reduziert, z. B. auf Codiergrad 1, ist. Entsprechend Ausführungsbeispielen kann die Codiervorschrift zusätzlich die Reihenfolge derart vorgeben, dass ein Codiergrad der codierten Segmente, die im ersten PHY-Paket übertragen werden, reduziert, wie z. B. auf 1 reduziert, ist.

Ausführungsbeispielen der vorliegenden Erfindung liegt die Erkenntnis zugrunde, dass bei deterministischen Übertragungsverfahren die mehreren Slots zur Übertragung mehrerer PHY-Pakete genutzt werden, wobei jedes PHY-Paket in codierter Form mehrere Source-Segmente, d. h. also Teile des Source-Pakets, umfasst. Hierdurch lässt sich die gleiche Anzahl an Source-Segmenten in weniger PHY-Paketen übertragen, wobei in den sonst genutzten Slots ebenso codierte Source-Segmente übertragen werden, nicht aber weitere, sondern welche, die zur Wiederholübertragung, also zur Vorwärts-Fehler-Korrektur, dienen. Insofern wird das Codieren dazu verwendet, um den Redundanzgrad zu erhöhen, um bei mindestens gleichbleibender Datenrate eine erhöhte Zuverlässigkeit zu erreichen. Vorteilhafterweise wird das letzte zu übertragende PHY-Paket zur Übertragung eines codierten Segments genutzt, bei welchem der Codiergrad reduziert ist, z. B. auf 1 reduziert ist. Das hat den Vorteil, dass die Codierkomplexität zum Ende der Übertragung abnimmt und so der Decodieraufwand reduziert ist. Das reduziert vorteilhafterweise die Latenz.

Gemäß Ausführungsbeispielen ist gemäß der Vorwärts-Fehler-Korrektur ein Source-Segment in mindestens zwei codierten Segmenten oder mindestens zwei PHY-Paketen enthalten. Beispielsweise sind die codierten Segmente linear unabhängig, d. h. sie bilden eine linear unabhängige Menge. Die Codierung erfolgt entsprechend Ausführungsbeispielen gemäß einer Codiermatrix, die zumindest für das letzte und/oder das erste Segment den Codiergrad 1 vorgibt. Bei genauer Betrachtung kann die Codiermatrix entsprechend Ausführungsbeispielen derart beschrieben werden, dass die Codiermatrix in nxn Teilmatrizen zerlegbar ist und/oder in nxn invertierbare Teilmatrizen zerlegbar ist. Der Aspekt mit den Teilmatrizen hat den technischen Effekt, dass z.B. so einzelne codierte Segmente durch eine Teilmatrix decodiert werden können, was Voraussetzung dafür schafft, dass eine schrittweise Decodierung erfolgt. Die Schritte sind in Entsprechung der Anzahl der empfangenen codierten Segmente. Entsprechend Ausführungsbeispielen reicht eine Anzahl k an codierten Segmenten zur Decodierung der Source-Segmente, wenn die Anzahl k größer oder gleich einer Anzahl n der Source-Segmente ist.

Zur Übertragung sei angemerkt, dass entsprechend Ausführungsbeispielen die Mehrzahl der Cycle jeweils zumindest einen ersten und einen zweiten Subcycle umfassen können, die mit unterschiedlichen Frequenzen oder sogar zeitgleich mit unterschiedlichen Frequenzen übertragen werden. Gemäß Ausführungsbeispielen werden pro Subcycle ein oder mehrere PHY-Pakete übertragen. Beispielsweise können pro Subcycle ein oder mehrere PHY-Pakete auch in unterschiedlichen Frequenzen übertragen werden. Sowohl für die Übertragung der mehreren PHY-Pakete als auch für die Übertragung der mehreren Subcycle können die unterschiedlichen Frequenzen durch ein Frequenzhoppingmuster definiert sein. Das Frequenzhoppingmuster kann sich über mehrere Cycle und/oder pro Cycle, d. h. beispielsweise über mehrere Subcycle und/oder pro Subcycle, d. h. beispielsweise über mehrere Slots, erstrecken bzw. definiert sein. Entsprechend Ausführungsbeispielen ist das Frequenzhoppingmuster vordefiniert und dem Transceiver mit Sendefunktionalität, aber auch dem Transceiver mit Empfangsfunktionalität bekannt.

Entsprechend Ausführungsbeispielen wäre es denkbar, dass die PHY-Pakete über mehrere Slots oder über mehrere Slots gleicher Frequenz übertragen werden. Entsprechend weiteren Ausführungsbeispielen können auch mehrere PHY-Pakete in einem Subcycle übertragen werden.

Entsprechend Ausführungsbeispielen wird gemäß der Codiervorschrift in dem ersten Subcycle des ersten Cycles ein erstes Source-Segment der mehreren Source-Segmente übertragen, wobei gemäß der Codiervorschrift in dem zweiten Subcycle des ersten Cycles ein zweites Source-Segment der mehreren Source-Segmente übertragen wird. Beispielsweise kann eine Kombination des ersten Source-Segments und des zweiten Source-Segments in einem zweiten oder folgenden Subcycle des ersten Cycles oder in einem Subcycle des zweiten Cycles als codiertes Segment übertragen bzw. wiederholt übertragen werden. Die Codiervorschrift gibt entsprechend Ausführungsbeispielen auch einen Gewichtungsfaktor vor.

Gemäß Ausführungsbeispielen kann in jedem Cycle und/oder in jedem Subcycle ein Bereich für einen Steuerbefehl, insbesondere für ChannelCode-Steuerbefehle, vorgesehen sein. Eine Signalisierung der Übertragung der codierten Segmente unter Nutzung des ersten Subcycles und/oder der codierten Segmente unter Nutzung eines weiteren Subcycles erfolgt in einem Bereich für die Steuerbefehle, insbesondere einem leeren Feld in dem Bereich für die Steuerbefehle. Entsprechend Ausführungsbeispielen kann die Signalisierung der Übertragung der codierten Segmente in dem ersten Subcycle und/oder der codierten Segmente in einem weiteren Subcycle über eine Checksumme, wie z. B. einen CRC-Wert bzw. CRC-32-Wert, erfolgen. Hierbei kann die Signalisierung der Übertragung der codierten Segmente in dem ersten Subcycle und/oder von weiteren codierten Segmenten über eine Checksumme eines jeweiligen Subcycles oder eines für eine bestimmte Übertragung definierten Bereichs eines Subcycles erfolgen, z. B. am Ende des jeweiligen Subcycles. Entsprechend Ausführungsbeispielen ist die Checksumme/CRC-Wert/CRC-32-Wert mittels einer logischen Funktion, insbesondere eine XOR-Funktion, mit einer ID des initialen Senders kombiniert/gefaltet. Der Transceiver ist ausgebildet, eine Flusskontrolle in Abhängigkeit von der Signalisierung in einem Standardmodus oder einem erweiterten Modus zur Übertragung der codierten Segmente zu aktivieren.

Entsprechend Ausführungsbeispielen können in jedem Subcycle ein oder mehrere Downlink-Pakete oder multigecastete Downlink-Pakete übertragen werden. Auch ist es entsprechend weiteren Ausführungsbeispielen möglich, in jedem Subcycle, d. h. also auch in den Subcyclen mit den Downlink-Paketen, ein oder mehrere oder maximal 8 Uplink-Pakete zu übertragen. Bei obigen Ausführungsbeispielen wurde von einem deterministischen Übertragungsverfahren ausgegangen. Beispielsweise kann die deterministische Länge bzw. maximale Länge ca. 5 ms je Cycle oder maximal ca. 10 ms oder maximal ca. 20 ms betragen. Entsprechend Ausführungsbeispielen ist der Transceiver ausgebildet, gemäß dem IO-Link-Standard bzw. dem IO-Link-Wireless-Standard zu agieren.

Ein weiteres Ausbildungsbeispiel schafft einen Sensor bzw. Aktorknoten umfassend einen Transceiver, der ausgebildet ist, codierte Segmente als Uplink-Segmente in einem für den Knoten zugewiesenen Uplink-Bereich der jeweiligen Subcycle zu übertragen. Entsprechend einem weiteren Ausführungsbeispiel kann der Transceiver auch Teil eines Masterknotens sein, der ausgebildet ist, codierte Segmente aus dem Uplink zu empfangen und/oder Pakete im Downlink zu senden.

Ein weiteres Ausführungsbeispiel schafft einen weiteren Transceiver, der ausgebildet ist, mindestens ein Source-Paket, das gesplittet und codiert ist, zu empfangen. Der weitere Transceiver umfasst einen Empfänger, einen Decoder und einen Kombinierer. Der Empfänger ist ausgebildet, mehrere PHY-Pakete zu empfangen, wobei jedes PHY-Paket ein codiertes Segment umfasst und mittels einer Mehrzahl von Cyclen mit jeweils einer Mehrzahl an Subcyclen übertragen wird. Jeder Subcycle weist mehrere Slots auf. Der Decoder ist ausgebildet, die codierten Segmente zu decodieren, um Source-Segmente zu erhalten. Der Kombinierer ist ausgebildet, die Source-Segmente zu mindestens einem Source-Paket zusammenzufügen. Bezüglich des Decoders sei angemerkt, dass dieser ausgebildet ist, das Decodieren durchzuführen, sobald eine Anzahl k an codierten Segmenten empfangen ist, wobei die Anzahl k zumindest einer Anzahl n der Source-Segmente entspricht (d. h. k ≥ n). Entsprechend Ausführungsbeispielen verwendet der Decoder zur Decodierung eine Codiermatrix und/oder aus der Codiermatrix abgeleitete Teilmatrizen. Der Vorteil mit den abgeleiteten Teilmatrizen ist, dass so einzelne codierte Segmente direkt decodiert werden können und die Decodierung auch möglich ist, ohne dass alle codierte Segmente empfangen sind. Wie oben bereits erläutert, reicht eine Anzahl k ≥ n an codierten Segmenten, die empfangen sind. Der Decoder ist ausgebildet, die Codiermatrix bzw. die Teilmatrizen (bzw. die intervierten Matrizen) zur Decodierung vorzuhalten. Hierzu berechnet er beispielsweise die inversen Matrizen bzw. Teilmatrizen im Vorfeld für jeden Empfangsfall und hält sie vor. Die Anzahl der vorzuhaltenden bzw. zu nutzenden Teilmatrizen bzw. inversen Matrizen kann systematisch reduziert werden, nämlich mit zunehmender Anzahl der empfangenen und/oder nicht empfangenen PHY-Pakete. Je nachdem, ob ein PHY-Paket erfolgreich oder nicht erfolgreich empfangen ist, können die bereits zu nutzende Matrizen weiter vorgehalten werden oder die nicht mehr zu nutzenden Teilmatrizen verworfen werden. Beispielsweise wird die Reduzierung durch Ausschluss von Teilmatrizen, die einem bestimmten PHY-Paket zugeordnet sind, durchgeführt, wenn das bestimmte PHY-Paket nicht empfangen ist. Alternativ wird die Teilmatrize verwendet, die einem bestimmten PHY-Paket zugeordnet ist, wenn das bestimmte PHY-Paket empfangen ist. Entsprechend Ausführungsbeispielen kann der Decoder mit fortschreitendem Empfang bereits ein partielles Decodieren basierend auf bereits erhaltenen codierten Paketen unter Verwendung der vorgehaltenen und/oder der vorgehaltenen reduzierten Teilmatrizen durchführen. Das erfolgt entsprechend Ausführungsbeispielen schrittweise während des Empfangs, d. h. also von Slot zu Slot.

Ein weiteres Ausführungsbeispiel schafft ein Verfahren zum Betreiben eines Transceivers (Sendefall). Das Verfahren umfasst die Schritte:
- gesplittetes und codiertes Übertragen von mindestens einem Source-Paket,
- Aufteilen des mindestens einem Source Packet in eine Mehrzahl von Source-Segmenten;
- Codieren der Mehrzahl von Source Segmenten per Codiervorschrift, um codierte Segmente zu erhalten;
- Übertragen der codierten Segmente als PHY-Pakete mittels mehreren Cyclen mit jeweils mehreren Subcyclen, wobei jeder Subcycle mehrere Slots aufweist.

Wiederum gibt die Codiervorschrift ein Übermitteln der Mehrzahl von Source-Segmenten mittels Vorwärts-Fehler-Korrektur zusammen mit einer Reihenfolge vor (Reihenfolge, so dass der Codiergrad im letzten PHY-Paket reduziert ist (Codiergrad 1)).

Ein weiteres Ausführungsbeispiel schafft ein Verfahren zum Betreiben eines Transceivers (Empfangsfall). Das Verfahren umfasst die Schritte
- Empfangen mehrerer PHY-Pakete, wobei jedes PHY-Paket ein codiertes Segment umfasst und mittels einer Mehrzahl von Cyclen mit jeweils einer Mehrzahl an Subcyclen übertragen wird, wobei jeder Subcycle mehrere Slots aufweist;
- Decodieren der codierten Segmente, um Source Segmente zu erhalten;
- Zusammenfügen der Source-Segmente zu mindestens einem Source-Paket.

Das Decodieren erfolgt sobald eine Anzahl k an codierten Segmenten empfangen ist, wobei die Anzahl k zumindest einer Anzahl n der Source-Segmenten entspricht. Entsprechend weiteren Ausführungsbeispielen kann das Verfahren computerimplementiert sein. Ausführungsbeispiele der vorliegenden Erfindung werden anhand der beiliegenden Zeichnungen erläutert. Es zeigen:
- Fig. 1a: ein schematisches Blockdiagramm eines Transceivers gemäß einem Basisausführungsbeispiel;
- Fig. 1b: eine schematische Darstellung der Verarbeitungs- und Übertragungskette zur Illustration der Segmentierung und Codierung gemäß Ausführungsbeispielen;
- Fig. 2a-c: schematische Darstellungen zur Illustration von deterministischen Übertragungen in Cyclen und Subcyclen gemäß Ausführungsbeispielen;
- Fig. 3a und 3b: schematische Diagramme von Cyclen und Subcyclen zur Erläuterung der Verarbeitungszeit bei der Übermittlung und Decodierung;
- Fig. 4a und 4b: schematische Darstellungen zur Erläuterung der Bildung einer Codiermatrix gemäß Ausführungsbeispielen;
- Fig. 5: eine schematische Darstellung zur Illustration einer Decodierstrategie gemäß Ausführungsbeispielen;
- Fig. 6: eine schematische Darstellung eines IO-Link-Wireless-Stacks zur Illustration eines exemplarischen Anwendungsbeispiels;
- Fig. 7a und 7b: schematische Tabellen zur Erläuterung von Network-Coding für IO-Link-Wireless als Anwendungsbeispiel;
- Fig. 8a und 8b: schematische Darstellungen zur Erläuterung von Network-Coding als Anwendungsbeispiel für IO-Link-Wireless in einer detaillierten Betrachtungsweise.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist.

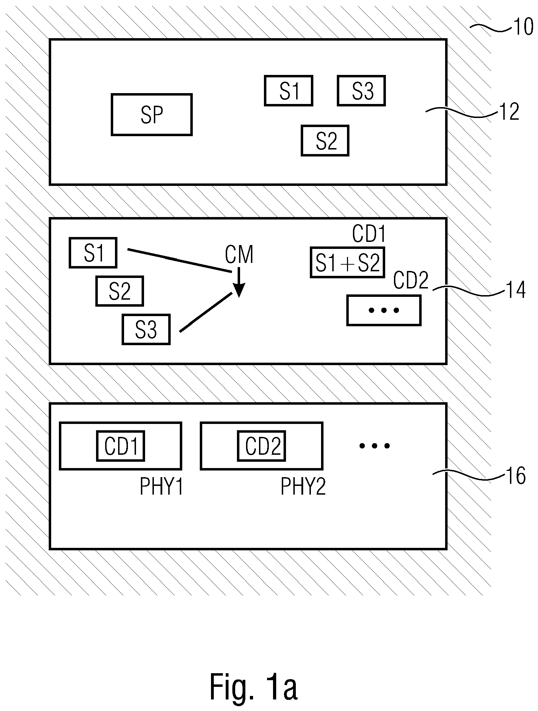

Fig. 1a zeigt einen Transceiver 10 mit einem Splitter 12, einem Codierer 14 sowie einem Sender 16.

Nachfolgend wird der Sendefall des Transceivers 10 erläutert. Der Transceiver 10 enthält ein Source-Paket SP; das durch den Splitter 12 in mehrere Source-Segmente S1, S2, S3 aufgeteilt ist. Diese Source-Segmente S1, S2 und S3 werden dann dem Codierer 14 zur Verfügung gestellt. Der Codierer 14 codiert entsprechend einer Codiervorschrift CM die Source-Segmente S1, S2 und S3 zu codierten Segmenten CD1, CD2, etc. Beispielsweise kann das codierte Segment CD1 und CD2 eine Kombination von S1 und S2 darstellen. Der Codiervektor gibt hierbei vor, wie die Segmente miteinander kombiniert werden, beispielsweise über einen entsprechenden Codiervektor. In diesem Codiervektor ist die Gewichtung der einzelnen miteinander codierten Segmente S1 und S2 z. B. vorgegeben.

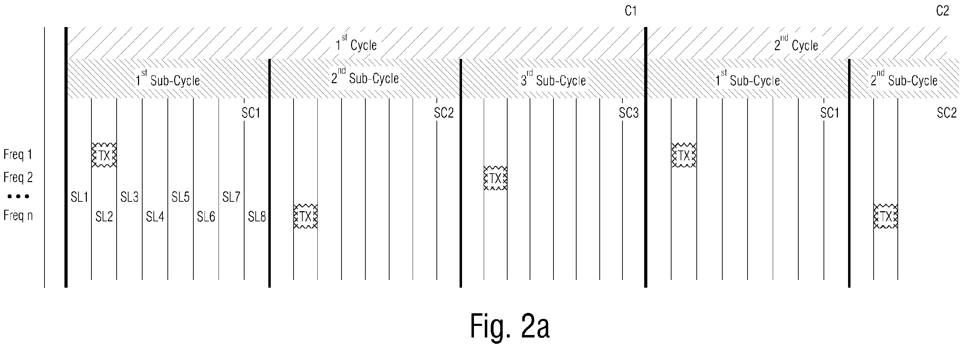

Der Sender 16 ist ausgebildet, die codierten Segmente als PHY-Pakete PHY1, PHY2, etc. mittels einer Mehrzahl von Cyclen zu übertragen. Im Detail erfolgt die Übertragung mit einem deterministischen System, nämlich so dass jeder Cycle jeweils eine Mehrzahl an Subcyclen umfasst, wobei in jedem Subcycle mehrere Slots vorgesehen sind. Jedes PHY-Paket wird beispielsweise in einem Slot oder auch aufeinanderfolgenden Slots übertragen. Dies wird im Zusammenhang mit Fig. 2a-c erläutert.

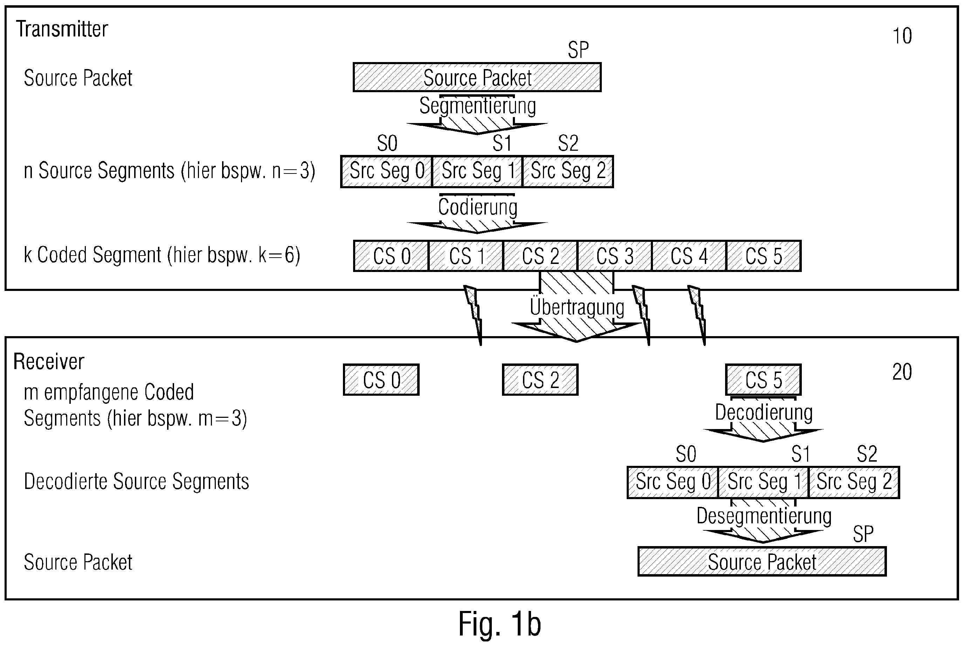

Bevor auf die Strukturierung in Cyclen, Subcyclen und Slots eingegangen wird und die Codiervorschrift erläutert wird, wird die eben erläuterte Segmentierung, Codierung und Übertragung sowohl aus Transmittersicht 10 als auch aus Receiversicht 20 im Zusammenhang mit Fig. 1b erläutert.

Fig. 1b zeigt einen Transmitter 10, bei welchem das Source-Paket SP segmentiert wird, in die drei Source-Segmente S0, S1, S2. Die n Source-Segmente (n = 3) werden dann codiert und in die codierten Segmente CS0-CS5 codiert (k = 6). Dann erfolgt durch den Transmitter 10 die Übertragung zu dem Receiver 20.

Dieser empfängt die codierten Segmente CS0-CS5 über einen entsprechenden Empfänger. Diese codierten Segmente, hier CS0, CS2 und CS5, werden dem Decodierer zugeführt und decodiert und dann desegmentiert, um wieder das Source-Paket SP5 zu erhalten. Das Source-Paket auf Receiverseite 20 ist inhaltlich identisch mit dem Source-Paket auf Transmitterseite 10, auch wenn die Übertragung der codierten Segmente CS1, CS3 und CS4 gestört ist. In dem vorliegenden Fall ist die Anzahl der m empfangenen codierten Segmente kleiner als die der gesendeten Segmente k (m = 3, k = 6).

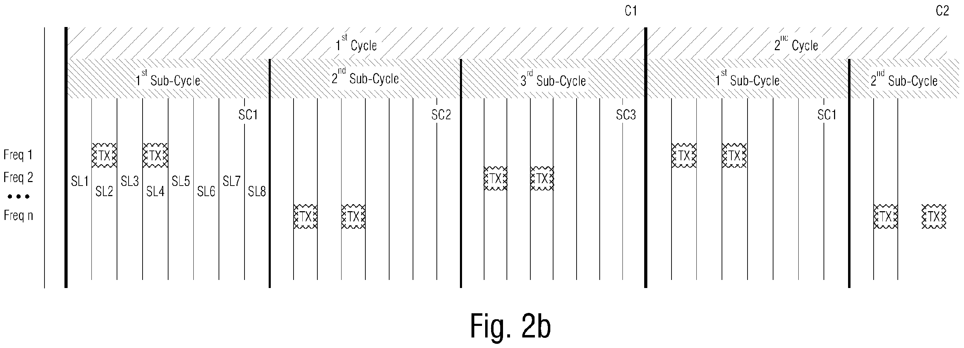

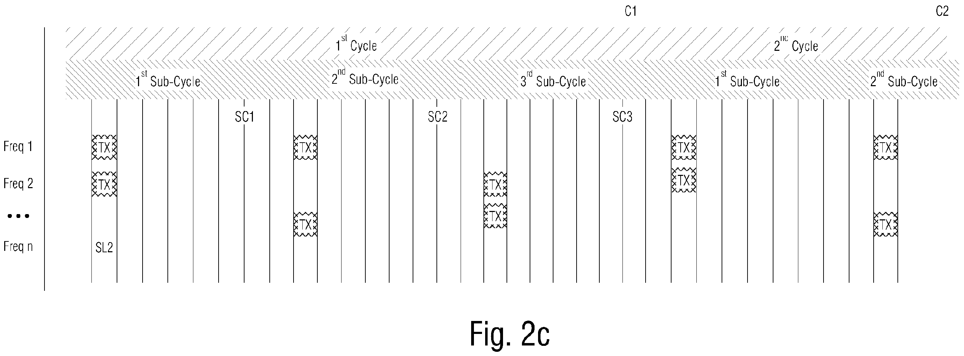

Entsprechend Ausführungsbeispielen gibt die Codiervorschrift CM vor, dass einzelne Source-Segmente wiederholt übertragen werden, nämlich mit einer sogenannten Vorwärts-Fehler-Korrektur (forward error correction, FEC). Die Konsequenz ist also, dass mehrere Source-Segmente S0, S1 und S2 an mehreren Stellen im Datenstrom enthalten sind, nämlich in codierter Form. Beispielsweise kann C0 das Source-Segment S0 umfassen, CS1 die Kombination von S0 und S1, CS2 die Kombination von S1 und S2, CS5 S2 alleine. Somit sind also alle Source-Pakete S0-S2 in den übertragenen codierten Segmenten CS0, CS2 und CS2 enthalten, auch wenn einige codierte Segmente nur gestört übertragen worden sind bzw. nicht übertragen sind. Anders gesprochen heißt es, dass die Vorwärts-Fehler-Korrektur Redundanzen in den codierten Datenstrom (Codierung = Addition (z.B. XOR) der mit Koeffizienten multiplizierten Source-Segmente durch Arithmetik) einfügt, so dass die Übertragungssicherheit erhöht ist. Die Anzahl der zu übertragenden PHY-Pakete wird nicht erhöht bzw. - anders ausgedrückt - es wird wiederum die Anzahl der zur Verfügung stehenden Slots genutzt, wie im Zusammenhang mit Fig. 2a, 2b und 2c erläutert werden wird. Dadurch bleibt die Datenrate gleich hoch oder kann je nach Codierungsgrad erhöht werden.

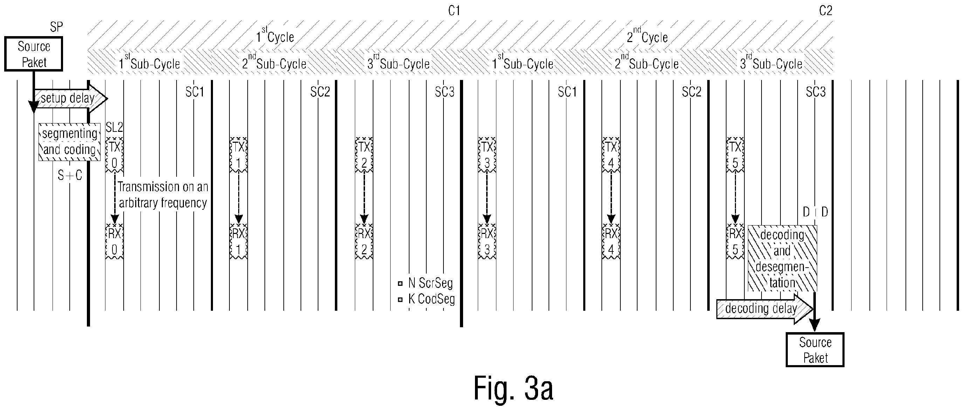

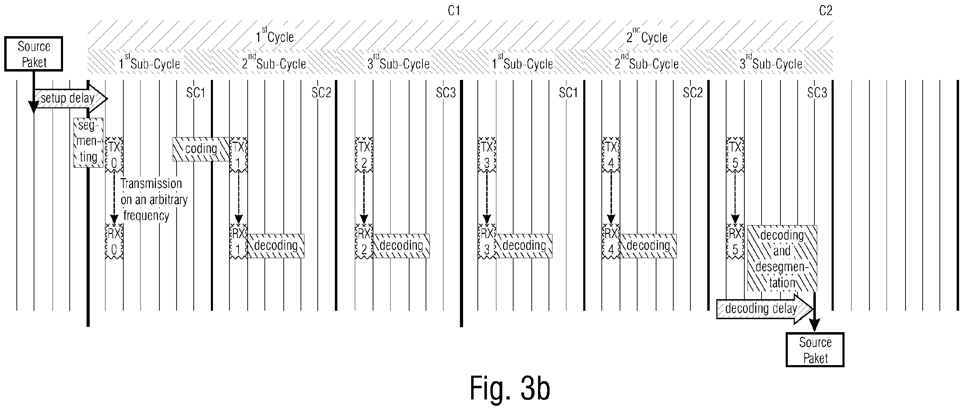

Im Vorgriff wird auf ein Detail eingegangen, das im Zusammenhang mit Fig. 3a und 3b erläutert werden wird. Entsprechend Ausführungsbeispielen weist das letzte codierte Segment, hier CS5, einen reduzierten Codiergrad, wie z. B. Codiergrad 1, auf. Hintergrund ist, dass so der Decodieraufwand ab dem Zeitpunkt des Empfangs des letzten codierten Segments CS5 reduziert ist, was eine schnelle Decodierung sicherstellt. Codiergrad 1 meint, dass im letzten codierten Segment CS5 ein Source-Segment ohne Codierung enthalten ist, so dass ab Erhalt des codierten Segments CS5 alle vorherigen codierten Segmente eindeutig aufgelöst werden können. Vorteil bei diesem Vorgehen ist weiter, dass bereits zu einem früheren Zeitpunkt mit der Decodierung begonnen werden kann, z. B. nach Erhalt von CS2, das, wie oben kurz erwähnt, beispielsweise das Source-Segment S1 und S2 enthält, während CS0 das Source-Segment S0 enthält. Somit liegen grundsätzlicher Weise alle Source-Segmente vor, wobei dann der Erhalt des dritten codierten Segments CS5 die eindeutige Decodierung der linear unabhängigen eingehenden Daten ermöglicht. Durch die Decodierung sind dann wiederum die Source-Pakete S0, S1 und S2 vorhanden, die dann durch eine weitere Einheit, nämlich den Kombinierer zu dem Source-Paket SP, zusammengefügt werden können.

Die codierten Segmente CS0-CS5 werden entsprechend Ausführungsbeispielen mit folgendem deterministischen Übertragungsverfahren zwischen dem Transmitter 10 und dem Transceiver 20 übertragen. Die Übertragung erfolgt in Cyclen C1, C2, wobei jeder Cycle C1, C2 mehrere Subcycle, wie z. B. SC1, SC2 und SC3 aufweist (vgl. Fig. 2a).

Fig. 2a zeigt die Cycle C1 und C2 mit den jeweiligen Subcyclen SC1, SC2 und SC3, die wiederum in Slots SL1-SL8 untergliedert sind. Diese Struktur stellt eine deterministische Übertragungsstruktur dar, wobei die Länge des jeweiligen Slots beispielsweise (mit 5 ms oder 10ms) vorgegeben ist. In jedem Subcycle SC1, SC2, SC3 bzw. für jeden Slot SL1-SL8 können unterschiedliche Frequenzen Freq1, Freq2, Freqn verwendet werden.

Bei der in Fig. 2 dargestellten Übertragung wird davon ausgegangen, dass das erste PHY-Paket PHY1, welches das codierte Segment CS0 enthält, im Subcycle SC1 übertragen wird, das zweite PHY-Paket mit dem codierten Segment CS1 in dem Subcycle SC2, das dritte PHY-Paket mit CS2 in dem Subcycle SC3. Die weiteren codierten Segmente CS3 werden dann in Subcyclen SC1, SC2, usw. von Cycle C2 übertragen. An dieser Stelle sei angemerkt, dass entsprechend Ausführungsbeispielen dem Transmitter 10 beispielsweise Slot SL2 zugeordnet ist und zwar fix für alle Subcycle SC1, SC2, SC3 der Cycle C1 und C2. An dieser Stelle sei angemerkt, dass dieses Vorgehen es beispielsweise ermöglicht, dass für unterschiedliche Transmitter unterschiedliche Subslots vorgesehen sein können, z. B. 7 der Subslots für Downlink und 1 der Subslots für Uplink. Dadurch, dass die unterschiedlichen Subcycle SC1, SC2 und SC3 in einem Slot, der einem Transmitter zugewiesen ist, entsprechend Ausführungsbeispielen mit unterschiedlichen Frequenzen übertragen werden, kann die Übertragungssicherheit vorteilhafterweise erhöht werden, da so systematische Störungen in dem einzelnen Frequenzbereichen ausgeschlossen werden können. Insofern können die einzelnen Subcycle SC1, SC2 und SC3 in dem jeweiligen Cycle einem Frequenzhoppingmuster folgen. An dieser Stelle sei angemerkt, dass natürlich auch innerhalb eines Subslots ein Frequencyhopping stattfinden kann, z. B. wenn mehrere Transmitter diesen Subslot nutzen oder alternativ, wenn ein Transmitter, wie z. B. der Transmitter 10, mehrere Subslots je Subcylce SC1/SC2/SC3 nutzt. Dieser Ansatz wird Bezug nehmend auf Fig. 2b erläutert.

Fig. 2b zeigt ein Übertragungsmuster mit wiederum zwei Cyclen, CS1 und CS2, wobei jeder Cycle drei Subcycle SC1, SC2 und SC3 aufweist. Jeder Subcycle umfasst wiederum 8 Slots SL1-SL8. In diesem Ausführungsbeispiel wird der Slot SL2 und SL4 für die Übertragung von PHY-Paketen genutzt (vgl. (TX). Das heißt also, dass der Transmitter 10 aus Fig. 1 mehr als einen Slot zur Übertragung der PHY-Pakete verwendet. Beispielsweise wird das codierte Segment CS1 und CS2 in dem ersten Subcycle SC1 übertragen, während die Pakete CS2 und CS3 in dem zweiten Subcycle SC2 übertragen werden. Die einzelnen Übertragungen (mittels PHY Pakten) sind mit TX markiert. Bei dieser Variante sind je Subcycle immer die gleichen Frequenzen genutzt, wobei das entsprechend Ausführungsbeispielen auch anders sein kann, wie im Zusammenhang mit Fig. 2c erläutert werden wird. An dieser Stelle sei angemerkt, dass entsprechend weiteren Ausführungsbeispielen ein PHY-Paket sich auch über mehrere Slots, z. B. den Slot SL2 und SL3, erstrecken kann.

Fig. 2c zeigt wiederum ein Übertragungsmuster mit den Cyclen C1 und C2, die jeweils die Subcycle SC1-SC3 aufweisen. Jeder Subcycle weist wiederum eine Mehrzahl an Slots SL1, usw. auf. In diesem Ausführungsbeispiel wird der Slot SL2 zur Übertragung von 2 PHY-Paketen genutzt, nämlich in 2 unterschiedlichen Frequenzen (vgl. TX).

Entsprechend Ausführungsbeispielen wäre auch eine Kombination, z. B. der Übertragungsvarianten aus Fig. 2b und 2c möglich, so dass beispielsweise 4 PHY-Pakete übertragen werden können. Entsprechend weiteren Ausführungsbeispielen wäre auch die Kombination derart denkbar, dass in einem ersten Slot SL2 ein PHY-Paket übertragen wird, während in einem zweiten Slot SL4 ein weiteres PHY-Paket, allerdings in einem anderen Frequenzbereich übertragen wird.

Zusammenfassend lässt sich also die deterministische Übertragung wie folgt definieren: Es erfolgt eine zyklische Übertragung in Cyclen. Benutzerdaten liegen als Source-Pakete vor, wobei die Source-Pakete in einem oder mehreren Cyclen übertragen werden sollen. Hieraus lässt sich entsprechend Ausführungsbeispielen die Zykluszeit für den Benutzer ableiten. Innerhalb eines Cycles erfolgt ebenfalls eine Unterteilung. Ein Cycle besteht beispielsweise aus ein oder mehreren Subcyclen. Ein Subcycle besteht beispielsweise aus ein oder mehreren Slots. Das PHY-Paket wird in einem oder mehreren Slots (langes PHY-Paket) übertragen. Entsprechend Ausführungsbeispielen stehen zur Übertragung eines PHY-Pakets mehrere Frequenzen zur Verfügung. Pro Subcycle können ein oder mehrere PHY-Pakete übertragen werden, dabei können auch mehrere Frequenzen benutzt werden. Zur Festlegung der benutzten Frequenz eines PHY-Pakets existieren Übertragungsregeln. Beispielsweise kann ein Frequencyhopping angewendet werden, bei dem pro Subcycle eine Frequenz für alle Slots benutzt wird und im nächsten Subcycle gewechselt wird. Abhängig von der PHY-Paketgröße sowie der Signalisierung ergibt sich in einem PHY-Paket eine maximal übertragbare Datenmenge. Ein längeres Source-Paket kann entsprechend Ausführungsbeispielen entsprechend der maximalen übertragbaren Datenmenge pro PHY-Paket in Source-Segmente zerlegt werden, die dann als PHY-Pakete übertragen werden. Das heißt anders herum gesprochen, dass entsprechend Ausführungsbeispielen die Segmentierung in Abhängigkeit der maximal zu übertragenen Datenmenge sowie der Anzahl der zur Verfügung stehenden Slots, Subcycle und Cycle erfolgt.

Auch wenn bei obigen Ausführungsbeispielen immer davon ausgegangen wurde, dass 2 oder mehr Cycle mit jeweils 3 Subcyclen verwendet werden, so wäre es selbstverständlich auch möglich, dass beispielsweise pro Cycle zur 2 Subcycle oder auch mehr als 3 Subcycle Verwendung finden. Auch kann entsprechend Ausführungsbeispielen die Anzahl an Slots pro Subcycle unterschiedlich von 8 sein (mehr oder weniger als 8). Typischerweise erfolgt die Strukturierung von Ressource-Portions (zeitlich in Cycle, Subcycle und Slots) durch den verwendeten Kommunikationsstandard. Ein Kommunikationsstandard, der derartig deterministische Übertragungszeiten anwendet, ist IO-Link-Wireless. Natürlich kommen auch andere Übertragungsstandards mit auch anderen Zeiten pro Slot in Betracht. Alle obigen Übertragungsvarianten gemäß Fig. 2a, 2b und 2c haben gemein, dass eine Vorwärts-Fehler-Korrektur gemäß dem im Zusammenhang mit Fig. 1 und 2 erläuterten Ansatz möglich ist. Durch die Erhöhung der Anzahl der genutzten Slots je Subcycle wird die Übertragungsrate gesteigert. Je nach Codiermuster können die Wiederholübertragungen gleich von der ersten Übertragung im ersten Subcycle oder auch beginnend mit einem späteren Subcycle erfolgen. Wie oben bereits erläutert, ist die Codiervorschrift derart gewählt, dass die letzte Übertragung, d. h. also das letzte PHY-Paket, was zur Übertragung eines Source-Segments dient, mit einem reduzierten Codiergrad, nämlich Codiergrad 1, gesendet wird. Hintergrund dieses Vorgehens wird Bezug nehmend auf Fig. 3a und 3b erläutert.

Fig. 3a startet von der im Zusammenhang mit Fig. 2 erläuterten Übertragungsweise der PHY-Pakete in Slot 2 des jeweiligen Subcycles SC1, SC2 und SC3 unter Verwendung der Cycle C1 und C2. Das Source-Paket SP wird vor der Übertragung in n Source-Segmente segmentiert (beispielsweise n = 3), so dass daraus k codierte Segmente erzeugt und übertragen werden können, mittels 6 PHY-Paketen (vgl. TX0-TX5). Der Empfänger erhält das Source-Paket SP, um dieses segmentiert und codiert mittels den Paketen TX0, TX1, TX2, TX3, TX4 und TX5 in den Subcyclen SC1-SC3 der Cycle CS1-CS2 zu übermitteln. Die jeweiligen Übermittlungsressourcen sind mit TX0-TX5 markiert. Wie zu erkennen ist, ist zwischen dem Erhalt des Source-Pakets SP und dem Aussenden des ersten PHY-Pakets TX0 eine gewisse Verzögerung vorhanden, die einerseits zur Segmentierung und Codierung und andererseits für das Setup benutzt wird. Das Zeitfenster für die Segmentierung und Codierung bzw. die entstehende Verzögerung ist mit dem Bezugszeichen S+C gekennzeichnet.

Das Übermitteln erfolgt wiederum in dem zweiten Slot SL2 des jeweiligen Subcycles SC1-SC3. In demselben Slot erfolgt dann der Empfang der PHY-Pakete RX0-RX5. Wie zu erkennen ist, kann eine beliebige Frequenz verwendet werden. Das Decodieren des segmentierten und codierten Source-Pakets SP2 benötigt ebenfalls eine gewisse Dauer, die mit dem Bezugszeichen D+D dargestellt ist. Diese Zeit wird auch als Decodierungsverzögerung/Decodierungsdelay bezeichnet. Dadurch, dass in dem PHY-Paket TX5 der Decodiergrad reduziert wird, kann die Dauer für die Decodierung und Desegmentierung D+D, also das Decodierungsdelay zum Erhalten des Source-Pakets, reduziert werden.

Die Reduzierung der Verarbeitungszeit bei D+D ist in Fig. 3b dargestellt. Wichtig ist, besonders den Decodiergrad des letzten übertragenen codierten Pakets zu reduzieren, da dieses signifikant für die zu erwartende Zeit bis zum Erhalt des Source-Pakets ist. Der Decodiergrad bei der Übertragung der PHY-Pakete mittels den Schritten RX1, RX2, RX3 und RX4 ist weniger relevant, da hier ausreichend Zeit aufgrund dessen zur Verfügung steht, da noch das Paket RX6 zu erwarten ist.

Entsprechend weiteren Ausführungsbeispielen kann auch der Decodiergrad des ersten PHY-Pakets, hier TX0, reduziert sein, z. B. auf Codiergrad 1, so dass das erste Paket gar nicht zu codieren ist und direkt nach der Segmentierung mittels dem ersten PHY-Paket zu übertragen ist. Dies reduziert die Verzögerungszeit S zwischen Erhalt des Source-Pakets SP und dem Übertragen von TX0. Die Codierarbeit kann dann nach der Segmentierung im Zeitfenster vor TX1 erfolgen. Das heißt also, dass entsprechend Ausführungsbeispielen einem reduzierten Decodiergrad des letzten codierten Pakets auch ein reduzierter Codiergrad des ersten Source-Pakets vorliegt. Beispielsweise kann der Decodiergrad 1 sein, was gleichbedeutend mit einer undecodierten Übertragung entsprechend Ausführungsbeispielen zu interpretieren wäre.

Zusammenfassend lässt sich also feststellen, dass das erste übertragene codierte Segment den Grad 1 haben kann und damit einem Source-Paket entspricht, was zur Reduktion des Setup-Delays führt. Die Codierung erfolgt deshalb zeitlich entspannt vor der Übertragung des zweiten codierten Segments. Mindestens das letzte codierte Segment besitzt ebenfalls Codiergrad 1. Dadurch sinkt der Aufwand der Decodierung nach Empfang des letzten codierten Segments. Entsprechend Ausführungsbeispielen kann auch das vorletzte codierte Segment einen reduzierten Codiergrad aufweisen, so dass beispielsweise die in der Mitte zu übertragenen codierten Segmente einen erhöhten Codiergrad haben. Mit Empfang eines zweiten codierten Segments (frühestens nach RX1) kann eine Decodierverarbeitung erfolgen.

Durch die Codiermatrix kann also eine Codierung mit Vorwärts-Fehler-Korrektur erreicht werden, die bezüglich Codieraufwand und Decodieraufwand optimiert ist. Die Codiervorschrift wird durch eine Codiermatrix abgebildet, die entsprechend Ausführungsbeispielen folgende Eigenschaften aufweisen kann: Mindestens das erste und das letzte codierte Segment haben bei der Übertragung Grad 1. Der Empfang von m = n beliebigen codierten Segmenten ist ausreichend zur vollständigen Decodierbarkeit, wobei n die Anzahl der Source-Segmente darstellt, d. h. jede Teilmenge mit n unterschiedlichen codierten Segmenten aus den k generierten codierten Segmenten ist linear unabhängig. Hierdurch ergeben sich N linear unabhängige Gleichungen.

Entsprechend Ausführungsbeispielen kann die Codiermatrix in nxn Matrizen zerlegbar bzw. invertierbar sein. Zur Erzeugung einer Menge von codierten Segmenten mit diesen Eigenschaften ist ein endlicher Körper mit einer ausreichenden Anzahl von Elementen zu wählen.

Zur Decodierung gibt es entsprechend Ausführungsbeispielen unterschiedliche Strategien. Entsprechend einer ersten Variante kann ein Gaußsches Eliminationsverfahren angewendet werden.

Entsprechend einer weiteren Variante kann im regulären Betrieb, der zeitkritisch ist, statt dem Gaußschen Eliminationsverfahren eine zweistufige Datenverarbeitung eingesetzt werden.

In der ersten Stufe, die vor dem regulären Betrieb stattfindet, werden alle Empfangsfälle, die eine vollständige Decodierung ermöglichen, identifiziert. Für jeden dieser Empfangsfälle wird eine invertierte Matrix berechnet. Diese ermöglicht eine Decodierung mit geringem Aufwand. Diese inversen Matrizen (auch Teilmatrizen genannt) werden auf dem Empfängerknoten abgespeichert bzw. allgemein vorgehalten.

In einer zweiten Stufe, die während des regulären Betriebs stattfindet, erfolgt dann eine partielle Decodierung bereits vor dem geplanten Empfang des letzten codierten Segments. Dazu werden bereits empfangene codierte Segmente verwendet, um eine Vorverarbeitung mit den noch infrage kommenden inversen Matrizen durchzuführen. Bei welchem bzw. nach welchem Empfangsvorgang die partielle Decodierung gestartet wird, ist eine Designentscheidung, von der der Verarbeitungsaufwand, der Übertragungsaufwand und das Zeitverhalten abhängig ist. Entsprechend einem Ausführungsbeispiel kann die Anzahl der infrage kommenden Teilmatrizen reduziert werden und zwar in Abhängigkeit von dem bereits empfangenen oder nicht empfangenen codierten Segmenten. Hintergrund ist, dass abhängig davon, was bereits empfangen ist oder auch was nicht bereits empfangen ist, aber bereits empfangen werden konnte, klar wird, welche Teilmatrizen genutzt werden können und welche nicht genutzt und dadurch wieder verworfen werden können.

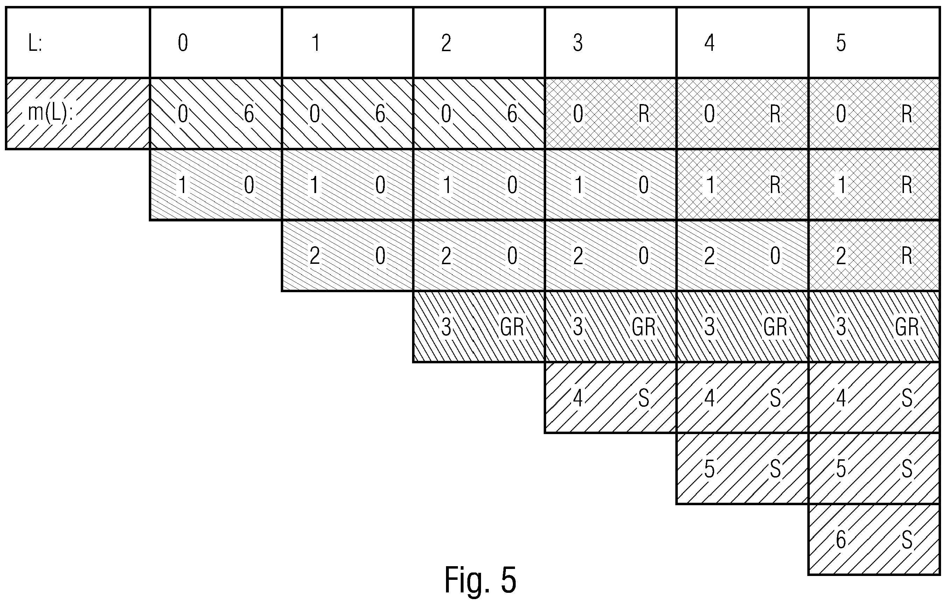

Fig. 5 illustriert die Decodierungsstrategie. Bei diesem Ausführungsbeispiel wird von n = 3 und k = 6 ausgegangen. In Spalten L werden die Empfangsvorgänge von 0-5 durchnummeriert. Diese sind im Wesentlichen gleichzusetzen mit den empfangenen Paketen RX0-RX5 bzw. den übermittelten codierten Segmenten CS0-CS5. Die Anzahl der korrekt empfangenen codierten Segmente am Ende vom Empfangsvorgang L ist mit m(L) symbolisiert. Felder, die mit R markiert sind, illustrieren die Vorgänge, bei welchen keine vollständige Decodierung möglich ist. Hintergrund ist, dass die Anzahl der korrekt empfangenen Pakete kleiner als die Anzahl der Source-Pakete ist. Wenn beim vorvorletzten Empfangsvorgang festgestellt wird, dass dieses Paket nicht empfangen wird, so ist es nicht mehr möglich, mindestens 3 in Entsprechung an n = 3 codierte Segmente korrekt zu empfangen.

Bevor keine vollständige Decodierung möglich ist, kann ggf. eine Decodierung bzw. auch eine partielle Decodierung möglich sein, auch wenn noch kein Paket empfangen ist. Diese Empfangsvorgänge bzw. Nichtempfangsvorgänge sind mit dem Bezugszeichen G gekennzeichnet. Sobald ausreichend viele codierte Pakete nicht empfangen wurden, wechselt der Status von G auf R. Solange noch keine Empfangsvorgang erfolgreich war, kann weder eine vollständige noch partielle Dekodierung erfolgen.

Mit dem Bezugszeichen O sind die Felder markiert, bei welchen schon eine partielle Decodierung möglich ist, wobei noch keine vollständige Decodierung möglich ist. Mit zunehmendem Empfangsvorgang und ausbleibenden weiteren Empfang von weiteren codierten Segmenten kann es vorkommen, dass keine Decodierung möglich ist, wenn beispielsweise nicht genügend codierte Segmente empfangen werden. Wenn beispielsweise eines der ersten Segmente, z. B. zugehörig zum Empfangsvorgang 0, 1, 2 oder 3, korrekt empfangen wurde, das vorletzte aber nicht, so kann auch festgestellt werden, dass die Zahl der korrekt empfangenen Pakete N immer kleiner n sein wird. Das ist bei 1 empfangenen codierten Segment bei dem vorletzten Paket gegeben und bei 2 erfolgreich empfangenen codierten Segmenten beim letzten. Hier wechselt der Zustand dann immer auf R. Ab N = 3 empfangenen Segmenten ist eine vollständige Decodierung möglich. Diese Situationen sind mit dem Bezugszeichen GR markiert. Frühestens ist das nach dem Empfangsvorgang 2 möglich. Der Vollständigkeit halber sei auch auf die markierte Situation S hingewiesen. Hier liegt ein überbestimmtes Gleichungssystem vor, d. h. dass mehr codierte Segmente empfangen als erforderlich sind. Praktisch hat das keine Relevanz aufgrund von Energieeffizienz.

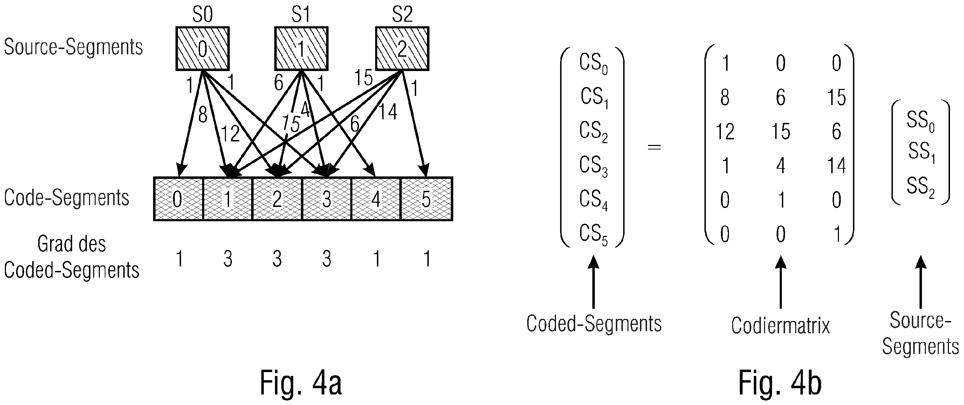

Nachfolgend wird Bezug nehmend auf Fig. 4a und 4b die Codierung von 3 Source-Segmenten S0, S1 und S2 in 5 codierte Segmente CS0-CS5 erläutert. Fig. 4a zeigt die 3 Source-Segmente S0-S2. Diese Source-Segmente S0-S2 werden als codierte Segmente CS0-CS5 codiert. Codierung umfasst die Addition der mit Koeffizienten multiplizierten Source-Segmente durch Arithmetik in endlichen Körpern. Die Addition kann dabei als logische XOR-Operation realisiert werden. CS1, CS2 und CS3 haben Codiergrad 3, während CS0, CS5 und CS6 einen Codiergrad von 1 aufweisen. Hintergrund ist, dass eine Verteilung der codierten Segmente wie folgt erfolgt: S0 wird auf CS1, CS2, CS3 und CS4 verteilt, S1 ist in den codierten Segmenten CS1, CS2, CS3 und CS4 enthalten. S2 ist in den codierten Segmenten CS1-CS5 enthalten. Daraus ergibt sich also, dass die Pakete CS0, CS4 und CS5 jeweils nur ein Source-Segment aufweisen. Die entsprechende Codiermatrix ist in Fig. 4b gezeigt. Die codierten Segmente ergeben sich durch Faltung der Codiermatrix mit dem Source-Segment.

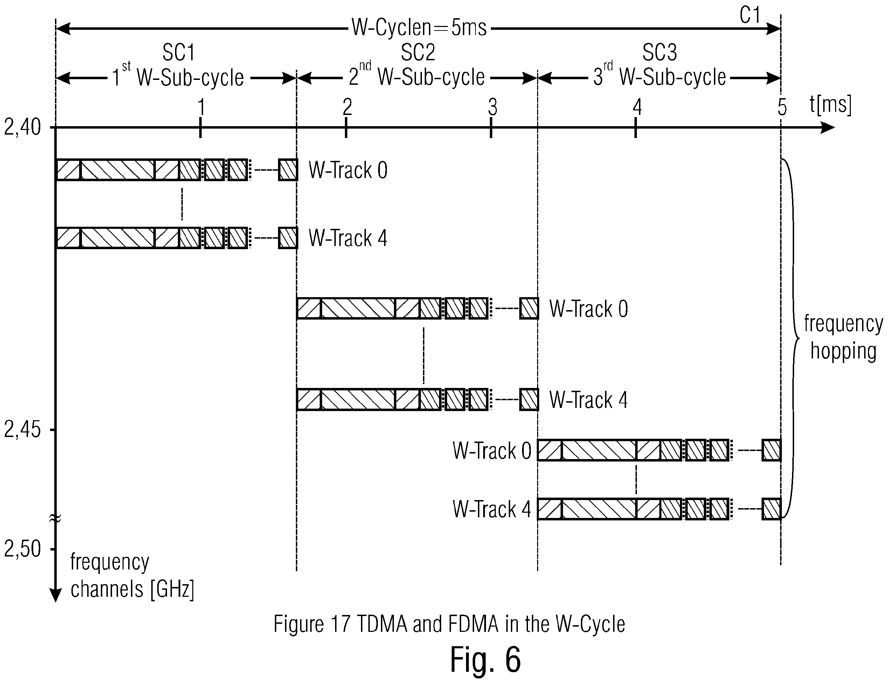

Bezug nehmend auf Fig. 6 wird nun ein deterministisches Übertragungsverfahren vorgestellt, bei welchem die Strukturierung in Cycle und Subcycle möglich ist. Hierbei handelt es sich um IO-Link-Wireless, mit W-Cyclen und W-Subcyclen. Zur Konsistenz sind wiederum die gleichen Bezugszeichen verwendet, auch wenn es sich hier um Cycle bzw. W-Cycle handelt. In den W-Tracks als PHY-Pakete erfolgt die Übermittlung der codierten Segmente. Hierzu steht für den ersten W-Subcycle SC1 W-Track 0 und W-Track 4 zur Verfügung. Die gleichen W-Track 0 und W-Track 4 sind auch im zweiten Subcycle SC2 und SC3 vorhanden, allerdings in unterschiedlichen Frequenzen. Das hier vorliegende Übertragungsverfahren IO-Link-Wireless kann derart definiert werden, dass 5 parallele Tracks mit je bis zu 8 Subslots für die Devices vorliegen. Insofern können bis zu 40 Devices bzw. 20 Devices mit DSlots Einsatz finden. Die W-Cycle haben 5 ms, unterteilt in 3 W-Subcycle. Pro W-Subcycle wird 1 Downlink-Slot und bis zu 8 Uplink-Slots verwendet.

Im Resultat heißt das, dass das Konzept für IO-Link-Wireless einsetzbar ist. Bei einem Drahtloskommunikationssystem mit einer deterministischen Zykluszeit, wie IO-Link-Wireless wird statt ARQ eine Vorwärts-Fehler-Korrektur verwendet. Durch systematisches Codieren werden aus n Source-Segmenten m codierte Pakete erzeugt, wobei die codierten Pakete eine linear unabhängige Menge bilden, d. h. es genügt n codierte Pakete zur Decodierung der n Source-Segmente. Die Übertragungsreihenfolge der codierten Pakete wird so gewählt, dass der Decodierungsaufwand nach Empfang des letzten codierten Segments minimiert wird, um so die Verzögerungszeit nach Empfang des letzten codierten Pakets gering zu halten.

Entsprechend Ausführungsbeispielen kann Downlink ein Multicast darstellen, d. h. dass mehrere Pakete zu ggf. mehreren Devices zusammengefasst übertragen werden. Die Sicherung der Datenpakete für Devices erfolgt über einen CRC32 bzw. allgemein ein CRC am Ende des Subcycles. Der Uplink kann Unicast darstellen, d. h. dass jedes Device seinen eigenen Slot sendet. Die Sicherung erfolgt wiederum über CRC bzw. CRC32. Entsprechend Ausführungsbeispielen wäre es denkbar, dass ein final XOR gesendet wird. Z.B. wir der CRC bzw. CRC32 mit der Unique-ID des Devices verknüpft, indem diese bspw. als Seed zur CRC-Berechnung verwendet wird oder nach der CRC-Berechnung die Unique-ID durch eine XOR-Operation wird. Dieses XOR-Feld bzw. CRC-Feld kann entsprechend Ausführungsbeispielen dazu verwendet werden, um zu symbolisieren, ob codierte Segmente enthalten sind und wie diese codierten Segmente enthalten sind. Entsprechend Ausführungsbeispielen kann auch eine Signalisierung mit einem anderen Mechanismus, z. B. unter Verwendung eines Control-Octets oder auch unter Verwendung von Bits im ChannelCode (ChC) erfolgen. Im ChannelCode gibt es reservierte Bits, die in Bezug auf die Anwendung eingesetzt werden können. Auch kann eine Flusssteuerung (FlowControl, FC) in Kombination mit Ausführungsbeispielen verwendet werden. Bezüglich der IO-Link-Wireless-Anwendung sei angemerkt, dass entsprechend Ausführungsbeispielen auch mehrere Segmente zur Übertragung von ein oder mehreren codierten Segmenten, Verwendung finden können. Inhalt der Signalisierung zur Übertragung eines (beliebig langen) Datenpakets (Source-Pakets) kann ein oder mehrere der folgenden Elemente umfassen:
- len: Datenlänge des Source-Pakets
- Codierrate, beispielsweise 1/3, 1/2, 2/3.

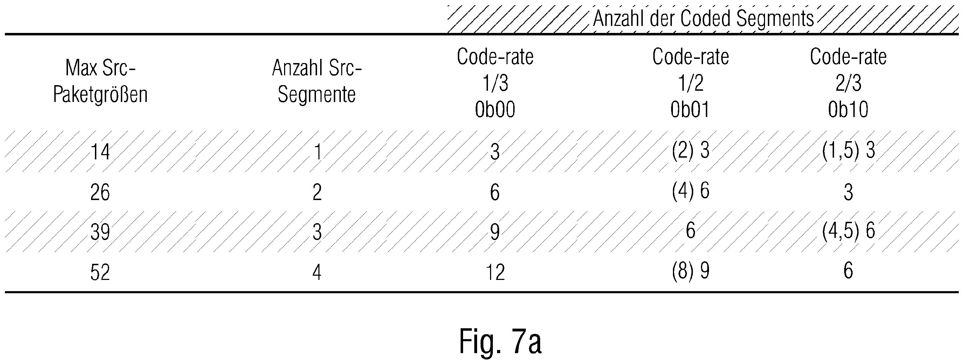

Daraus lässt sich die Anzahl der Segmente errechnen: n = Aufrunden (len / MaxBytes-PerSegment). Aus der Codierrate lässt sich die Anzahl der m codierten Segmente bestimmen, durch Berechnung oder über eine Tabelle. Bei der Berechnung wird die Anzahl der Unterzyklen pro Zyklus betrachtet und beispielsweise auf das nächste Vielfache der Unterzyklen aufgerundet. Die Variante mit der Tabelle ist beispielsweise in Fig. 7a dargestellt. Für unterschiedliche maximale Source-Paketgrößen wird die Anzahl der Source-Segmente in Abhängigkeit von der Codierrate abgegeben. Bei Source-Paket-Len = 14 könnte dies speziell signalisiert und einem Segment übertragen werden, ansonsten würden 13 Bit/Byte in jedem Source-Segment passen. Entsprechend Ausführungsbeispielen wäre natürlich auch ein anderer Ansatz möglich.

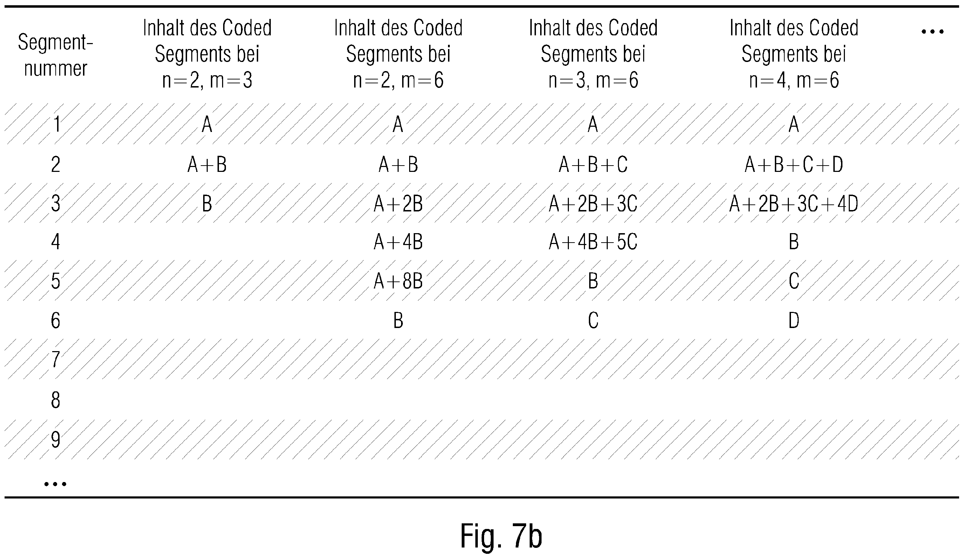

Aus der Anzahl der Source-Segmente steht die Codiervorschrift als Liste fest, nach der die codierten Segmente gebildet werden. Diese Liste wird beispielsweise vor der eigentlichen Übertragung übertragen, wobei mindestens n codierte Segmente notwendig sind für eine Decodierung am Empfänger. Jedes weitere übertragene codierte Segment verbessert die Zuverlässigkeit, wie aus Fig. 7b hervorgeht. A stellt hierbei das erste Source-Segment dar, während B das zweite Source-Segment darstellt. Der Inhalt des codierten Segments je Segmentnummer ist angegeben, für unterschiedliche Fälle, nämlich n = 2 und m = 3 bzw. n = 2 und m = 6 bzw. n = 3 und m = 6 bzw. n = 4 und m = 6. An dieser Stelle sei angemerkt, dass Fig. 7b nur Beispiel für Codierschemata zeigt. Ausgehend hiervon werden linear unabhängige Kombinationen festgelegt.

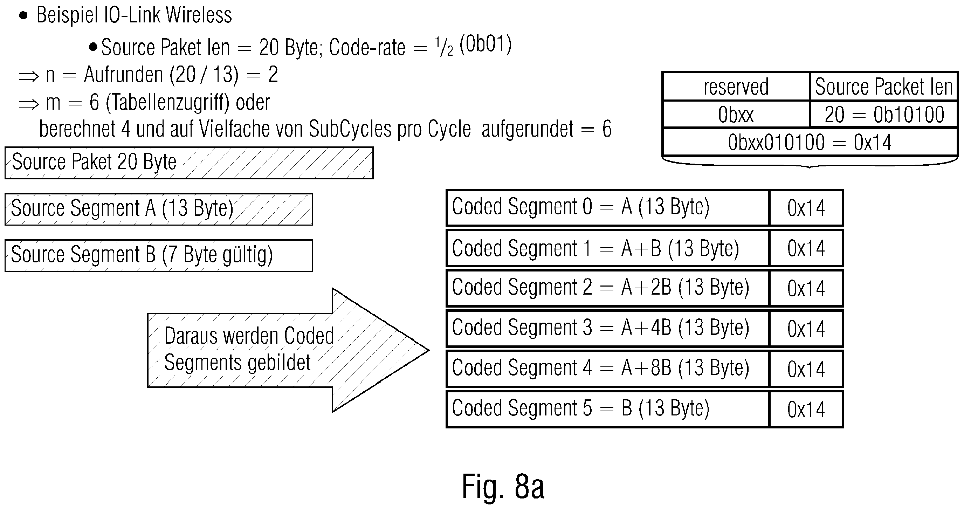

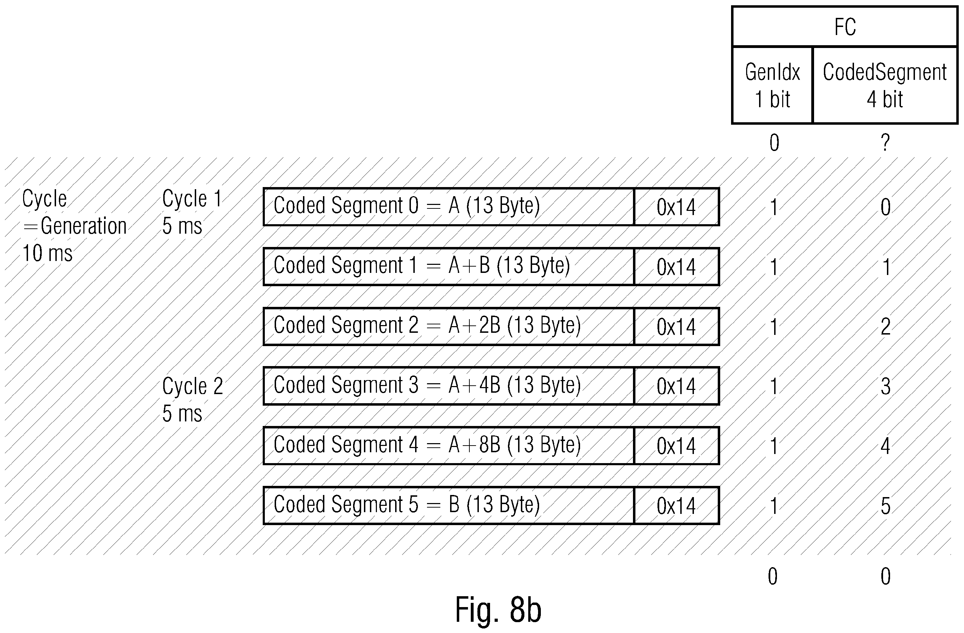

Ausgehend von einem Source-Paket mit len = 20 Byte/Bit und einer Codierrate von 1/2 (0b01) ergeben sich dann aufgerundet n = 2 und m = 6 über Tabellenzugriff oder berechnet auch 4 und auf ein Vielfaches von Subcycles pro Cycle aufgerundet = 6. Das kann dann wie in Fig. 8a dargestellt signalisiert werden. Fig. 8a stellt auch die daraus gebildeten codierten Segmente dar. Die Übertragung derselben in den Cycle 1 und 2 bzw. den Subcyclen ist in Fig. 8b dargestellt.

Wie oben beschrieben genügt der erfolgreiche Empfang von n codierten Segmenten aus k generierten codierten Segmenten. Die Signalisierung kann wie folgt bei IO-Link-Wireless erfolgen: Generation ID kennzeichnet die zu dem Source-Paket gehörigen codierten Segmente. CodedSegment kennzeichnet die Segmentnummer der codierten Segmente.

Die Information FlowControl FC wird im Control-Octet neu belegt. Die Neubelegung wird dadurch erkannt, dass ein neuer, bislang reservierter ChannelCode ChC, beispielsweise 6 vorhanden ist oder dadurch, dass CRC32 durch Magic-Code, ähnlich dem Mechanismus Final XOR bei dem CRC32 mit der Device-ID verknüpft wird.

Bei obigen Ausführungsbeispielen wurde das gesamte Konzept aus Transmittersicht erläutert. Weitere Ausführungsbeispiele beziehen sich auf einen entsprechenden Receiver. Der Receiver umfasst ein Empfängerteil, eine Decodiereinheit sowie einen Desegmentierer, d.h. ein umgekehrter Aufbau analog zum Transceiver 10 aus Fig. 1a: Empfänger analog zu Sender 16; Decodierer analog zum Codierer 14 aus Fig. 1a sowie Desegmentierer bzw. Kombinierer analog zum Segmentierer 12 aus Fig. 1a.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Nachfolgende werden weitere Aspekte und Hintergrundwissen erläutert.

Weitere Ausführungsbeispiele der vorliegenden Erfindung beziehen sich auf einen Transceiver, der ausgebildet ist, Frames mit zumindest einem ersten und einem zweiten Cycle zu senden und/oder zu empfangen. Entsprechend Ausführungsbeispielen kann der Transceiver einen IO-Link-Wireless-Transceiver darstellen.

Ausführungsbeispiele schaffen einen Transceiver, der ausgebildet ist, Frames umfassend eine Mehrzahl von Cyclen mit einer deterministischen Zykluszeit zu übertragen (Übertragen meint z.B. inkl. Dekodierern). Der Transceiver ist ausgebildet, um auf Basis von n Source-Segmenten codierte Pakete zu erzeugen, und (m) uncodierte Pakete und die codierten Pakete mittels der Mehrzahl der Cycle zu übermitteln, wobei eine Reihenfolge der uncodierten und codierten Pakete so gewählt ist, dass ein zuletzt zu übertragendes Paket der uncodierten und/oder codierten Pakete im Vergleich zu einem vorher zu übertragenden Paket der uncodierten und/oder codierten Pakete hinsichtlich Codier-komplexität, Codiergrad, codierten Inhalt und/oder Codierrate reduziert oder zumindest nicht erhöht ist, wobei der Transceiver ausgebildet ist, die n Source-Segmente mittels Forward Error Correction zu übermitteln. Entsprechend Ausführungsbeispielen ist der Transceiver ausgebildet, die n Source-Segmenten in den uncodierten Pakete zu übermitteln, z.B. nach oder vor der Über-tragung der codierten Pakete, d.h. zu Beginn der Mehrzahl der Cycle (ein Paket kann z.B. ein Source-Segment (uncodiert) sein). In diesem Fall bildet die Übertragung der codierten Pakete einen Teil der oder die Forward Error Correction.

Bei der Übertragungsreihenfolge erfolgt beispielsweise die Übermittlung der codierten Pakete zuerst, die der uncodierten bzw. Source-Pakete (synonym) hingegen am Ende.

Anmerkung: Mit m ist die Anzahl der zur Verfügung stehenden Übertragungsvorgänge bezeichnet. Die codierten und uncodierten Pakete werden übermittelt. Deshalb beträgt die Summe aus codierten und uncodierten Paketen m.

Hieraus ergibt sich also entsprechend Ausführungsbeispielen folgende Lösung:
□ Bei drahtlosen Kommunikationssystemen mit einer deterministischen Zykluszeit wird entsprechend Ausführungsbeispielen statt ARQ eine Forward Error Correction (FEC) verwendet.
□ Durch systematisches Codieren werden aus n Source-Segmenten codierte Pakete erzeugt, wobei die codierten Pakete eine linear unabhängige Menge bilden, d.h. es genügen n codierte Pakete zur Dekodierung der n Source-Segmente.
□ Die Übermittlungsreihenfolge der codierten Pakete wird entsprechend Ausführungsbeispielen so gewählt, dass der Dekodieraufwand nach Empfang des letzten codier-ten Segments minimiert wird, dadurch kann die Verzögerungszeit nach Empfang des letzten codierten Pakets gering gehalten werden.
□ Die Übertragung von codierten Paketen höheren Grades (= Anzahl der Source-Segmente in einem codierten Paket) erfolgt z.B. zu Beginn des Zyklus, komplexere Dekodiervorgänge finden somit zu Beginn des Zyklus statt
Gemäß Ausführungsbeispielen umfasst die Forward Error Correction zumindest eine Wiederholübertragung der codierten Pakete in den ein oder mehreren Cyclen der Mehrzahl von Cyclen.

Gemäß einem Ausführungsbeispielen erfolgt die Übertragung der uncodierten Pakete am Ende der ein oder mehreren Cyclen der Mehrzahl von Cyclen. Am Anfang kann z.B. die Übertragung der uncodierten Pakete bzw. reinen Sourcepakete erfolgen: z.B. für die Spalte n=2,m=3 ist die Reihenfolge der Übertragungen: A+B (codiert), A (uncodiert), B (uncodiert). Gemäß einem anderen Ausführungsbeispielen erfolgt die Übertragung der codierten Pakete am Ende der ein oder mehreren Cyclen der Mehrzahl von Cyclen. Am Anfang kann z.B. die Übertragung der uncodierten Pakete bzw. reinen Sourcepakete erfolgen. Entsprechend Ausführungsbeispielen kann in einem Übertragungsvorgang entweder ein codiertes oder uncodiertes Paket übertragen werden.

Gemäß Ausführungsbeispielen erfolgt die Übertragung von codierten Paketen höheren Grades, insbesondere codierte Pakete mit höherer Anzahl der Source-Segmente in einem codierten Paket zu Beginn der ein oder mehreren Cyclen der Mehrzahl von Cyclen.

Gemäß Ausführungsbeispielen bilden die codierten Pakete eine linear unabhängige Menge; die n codierten Pakete können zur Dekodierung der n Source-Segmente genügen.

Gemäß Ausführungsbeispielen werden die Mehrzahl der Cycle jeweils zumindest einen ersten und einen zweiten Subcycle umfassen, die mit unterschiedlichen Frequenzen übertragen.

Gemäß Ausführungsbeispielen umfasst der erste Subcycle eines ersten Cycles ein erstes uncodiertes Paket umfasst und wobei der zweite Subcycle des ersten Cycles ein zweites uncodiertes Paket umfasst oder wobei der erste Subcycle des ersten Cycles ein ersten Paketteil umfasst und wobei der zweite Subcycle des ersten Cycles ein zweite Paketteil.

Bei drahtlosen Kommunikationssysteme mit einer deterministischen Zykluszeit, deren Zyklen aus Unterzyklen für die Übertragung eines Segments bestehen wird statt ARQ ein FEC basierend auf Network Cording verwendet. Je nach Codierrate verbessert sich die Zuverlässigkeit, d.h. die Paket-Verlustrate sinkt. Ferner reduzieren sich die notwendige Anzahl der Zyklen, d.h. die mögliche Datenrate steigt.

Gemäß Ausführungsbeispielen kann eine Kombination des ersten Pakets und des zweiten Pakets in einen dritten Subcycle eines ersten Cycles der Mehrzahl der Cycle und in einen Subcycle des zweiten Cycles der Mehrzahl der Cycle als eines oder mehrere der codierten Pakete übertragen werden.

Gemäß Ausführungsbeispielen umfasst die Mehrzahl der Cycle einen dritten Subcycle umfasst; beispielsweise kann ein drittes uncodiertes Paket in einem dritten Subcycle des ersten und/oder des zweiten Cycles der Mehrzahl der Cycle übertragen werden.

Gemäß Ausführungsbeispielen erfolgt die Übertragung des ersten, zweiten und dritten Pakets als eines oder mehrere der codierten Pakete in Subcyclen des zweiten Cycles.

Gemäß Ausführungsbeispielen wird ein viertes oder weiteres uncodiertes Paket in einem ersten Subcycle eines zweiten Cycles der Mehrzahl der Cycle übertragen.

Gemäß Ausführungsbeispielen erfolgt eine Übertragung des ersten Pakets und des zweiten Pakets und des dritten Pakets und des vierten oder weiteren Pakets in dem zweiten und dritten Subcycle des zweiten Cycles als eines oder mehrere der codierten Pakete.

Durch diese Varianten kann die Datenrate gesteigert werden ohne negative Einbußen bei der Zuverlässigkeit zu haben.

Gemäß Ausführungsbeispielen erfolgt die Kombination des ersten und zweiten Pakets und/oder die Kombination von zwei Paketen als eines oder mehrere der codierten Pakete mittels Netzwerkcodierung oder mittels Netzwerkcodierung unter Zuhilfenahme von Gewichtungsfaktoren.

Gemäß Ausführungsbeispielen erfolgt in jedem Cycle und/oder in jedem Subcycle ein Bereich für Steuerungsbefehle, insbesondere für ChannelCode-Steuerbefehle vorgesehen ist und wobei eine Signalisierung der Übertragung von dem ersten und zweiten Paket in dem ersten Subcycle und/oder des ersten und zweiten codierten Pakets in einem Subcycle in dem Bereich für Steuerungsbefehle, insbesondere einem leeren Feld in dem Bereich für Steuerungsbefehle.

Gemäß Ausführungsbeispielen erfolgt die Signalisierung der Übertragung von dem ersten und zweiten Paket in dem ersten Subcycle und/oder als eines oder mehrere der codierten Pakete in einem Subcycle über eine Checksumme, einen CRC-Wert und/oder einen CRC-32-Wert oder über eine Checksummen eines jeweiligen Subcycles oder eines für eine bestimmte Übertragung definierten Bereichs eines Subcycles; eine Checksumme, ein CRC-Wert und/oder ein CRC-32-Wert ist z.B. mittels einer logischen Funktionen, insbesondere einer XOR-Funktion mit einer ID des initialen Senders kombiniert.

Gemäß Ausführungsbeispielen ist der Transceiver ausgebildet, eine Flusskontrolle in Abhängigkeit von der Signalisierung in einem Standardmodus oder einem erweiterten Modus zur Übertragung von dem ersten und zweiten Paket in dem ersten Subcycle und/oder als eines oder mehrere der codierten Pakete in einem Subcycle zu aktivieren.

Gemäß Ausführungsbeispielen ist der Transceiver ausgebildet, jeden Subcycle und/oder jeden Cycle mit einer anderen Frequenz entsprechend eines Frequency-Hopping-Musters zu übertragen.

Gemäß Ausführungsbeispielen umfasst jeder Subcycle ein oder mehrere Downlink-Pakete oder multigecastete Downlink-Pakete; z.B. umfasst jeder Subcycle ein oder mehrere oder maximal acht Uplink-Pakete.

Gemäß Ausführungsbeispielen weist jeder Cycle eine maximale Länge von 5 ms oder eine maximale Länge von 10 ms oder eine maximale Länge von 20 ms auf.

Gemäß Ausführungsbeispielen ist der Transceiver zur Kommunikation gemäß dem IO-Link-Standard oder IO-Link Wireless Standard ausgebildet.

Ausführungsbeispiele schaffen einen Sensor und/oder Aktorknoten umfassend einen Transceiver, der ausgebildet ist, ein erstes und zweites Paket sowie eine Kombination des ersten und zweiten Pakets als Uplink in einem für den Knoten zugewiesenen Uplink-Bereich der jeweiligen Subcycle zu übertragen.

Ausführungsbeispiele schaffen einen Masterknoten mit einem Transceiver, der ausgebildet ist, ein erstes und zweites sowie kombiniertes erstes und zweites Paket aus dem Uplink zu empfangen und/oder ein Paket im Downlink zu senden.

Ausführungsbeispiele schaffen ein Verfahren zum Betreiben eines Transceivers, mit folgenden Schritten:
Übertragen von Frames umfassend eine Mehrzahl von Cyclen mit einer deterministischen Zykluszeit,

Erzeugen auf Basis von n Source-Segmenten von codierten Pakete, und Übermitteln von uncodierten Paketen und der codierten Pakete mittels der Mehrzahl der Cycle, wobei eine Reihenfolge der uncodierten und codierten Pakete so gewählt ist, dass ein zuletzt zu übertragendes Pakete der uncodierten und/oder codierten Pakete im Vergleich zu einem vorher zu übertragenden Pakete der uncodierten und/oder codierten Pakete hinsichtlich Codierkomplexität, Codiergrad, codierten Inhalt und/oder Codierrate reduziert oder zumindest nicht erhöht ist,

Übermitteln der n Source-Segmenten mittels Forward Error Correction.

Gemäß Ausführungsbeispielen kann die Mehrzahl der Cycle jeweils zumindest einen ersten und einen zweiten Subcycle umfassen, die mit unterschiedlichen Frequenzen übertragen werden; alternativ/additiv umfasst der erste Subcycle ein erstes Paket der codierte Paket umfasst und wobei der zweite Subcycle ein zweites Paket der codierten Pakete um-fasst oder wobei der erste Subcycle ein erstes Paketteil umfasst und wobei der zweite Subcycle ein zweites Paketteil umfasst.

Das Verfahren kann computerimplementiert sein.

Die Grundidee diese speziellen Implementierung besteht in der Anwendung von Network Coding für IO-Link Wireless bzw. allgemein für Kommunikationssysteme mit einer deterministischen Zykluszeit:
Bei drahtlosen Kommunikationssystemen mit einer deterministischen Zykluszeit, deren Zyklen aus Unterzyklen für die Übertragung eines Segments bestehen, wird statt ARQ eine Forward Error Correction bevorzugt, aber nicht zwingend basierend auf Network Coding verwendet.

Entsprechend Ausführungsbeispielen verändert sich die Codierrate wie folgt:
- verbessert sich die Zuverlässigkeit, das heißt, die Paketverlustrate sinkt.
- reduziert sich die notwendige Anzahl von Zyklen, das heißt, die mögliche Datenrate steigt.

Ausführungsbeispiele der vorliegenden Erfindung, wie sie oben bereits spezifiziert wurden, machen genau von diesem Ansatz Gebrauch.

An dieser Stelle sei angemerkt, dass IO-Link Wireless nur ein exemplarischer Kommunikationsstandard ist, für den sich die Erfindung eignet, wobei der Ansatz natürlich auch in weitere Kommunikationssysteme übertragbar ist.

Nachfolgend werden weitere Aspekte, insbesondere bezüglich der Signalisierung des neuen Modus mit der erhöhten Datenrate und/oder der erhöhten Zuverlässigkeit erläutert.

Ausführungsbeispiele der vorliegenden Erfindung betreiben ein Netzwerk mit entsprechenden Devices. Weitere Ausführungsbeispiel beziehen sich auf ein oder mehrere entsprechende Devices, wie z. B. Sensorknoten, die ihre Sensordaten an einen (zentralen) Master oder allgemein ein anderes Devices übersenden. Weitere Ausführungsbeispiele beziehen sich auf einen entsprechenden Master.

Entsprechend weiteren Ausführungsbeispielen kann es bei den Sensor Devices auch Aktoren geben, die z. B. vom Master Steuerdaten erhalten. Insofern beziehen sich weitere Ausführungsbeispiele auf einen Aktor als Device. Selbstverständlich sind auch Sensoraktoranwendungen denkbar.

Weitere Ausführungsbeispiele beziehen sich auf ein entsprechendes Verfahren zum Betreiben eines Masters, eines Sensorknotens oder eines Aktorknotens bzw. eines Sensoraktorknotens.

Entsprechend weiteren Ausführungsbeispielen kann die Erfindung auch computerimplementiert sein.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichen:

Transmitter (10)
Segmentierer (12)
Codierer (14)
Sender (16)
Source-Paket (12)
Source-Segment (S0, S1, S2)
Codiertes Segment (CSO, CS1, CS2, CS3, CS4, CS5)
Cycle (C1, C2)
Subcycle (SC1, SC2, SC3)
Slot (SL1, SL2, SL3, SL4, SL5, SL6, SL7, SL8)

## Patentansprüche

1. Transceiver, der ausgebildet ist, mindestens ein Source-Paket (12) gesplittet und codiert zu übertragen, mit folgenden Merkmalen:
einem Splitter, der ausgebildet ist, das mindestens eine Source-Paket (12) in mehrere Source-Segmente (S0, S1, S2) aufzuteilen;
einem Codierer (14), der ausgebildet ist, die mehreren Source-Segmente (S0, S1, S2) per Codiervorschrift zu codieren, um codierte Segmente (CSO, CS1, CS2, CS3, CS4, CS5) zu erhalten;
einem Sender (16), der ausgebildet ist, die codierten Segmente als PHY-Pakete mittels einer Mehrzahl von Cyclen (C1, C2) mit jeweils einer Mehrzahl an Subcyclen (SC1, SC2, SC3) zu übertragen, wobei jeder Subcycle (SC1, SC2, SC3) mehrere Slots (SL1, SL2, SL3, SL4, SL5, SL6, SL7, SL8) aufweist;
wobei die Codiervorschrift ein Übermitteln der Mehrzahl von Source-Segmente (S0, S1, S2) mittels Vorwärts-Fehler-Korrektur vorgibt und wobei die Codiervorschrift eine Reihenfolge derart vorgibt, dass ein Codiergrad der codierten Segmente (CSO, CS1, CS2, CS3, CS4, CS5), die im letzten PHY-Paket übertragen werden, reduziert oder auf Codiergrad 1 reduziert ist.

2. Transceiver nach Anspruch 1, wobei die Codiervorschrift eine Reihenfolge derart vorgibt, dass ein Codiergrad der codierten Segmente (CSO, CS1, CS2, CS3, CS4, CS5), die im ersten PHY-Paket übertragen werden, reduziert oder auf Codiergrad 1 reduziert ist.

3. Transceiver gemäß einem der vorherigen Ansprüche, wobei gemäß der Vorwärts-Fehler-Korrektur ein Source-Segment (S0, S1, S2) in mindestens zwei codierten Segmenten (CSO, CS1, CS2, CS3, CS4, CS5) und/oder mindestens zwei PHY-Paketen enthalten ist; und/oder
wobei jede beliebige Teilmenge der codierten Segmente (CSO, CS1, CS2, CS3, CS4, CS5) mit höchstens n Elementen eine linear unabhängigen Menge bilden, wobei n die Anzahl der Source Segmente bezeichnet; und/oder
wobei die Codiervorschrift in Form einer Codiermatrix vorliegt, wobei die Codiermatrix zumindest für das erste und/oder letzte codierte Segment (CSO, CS1, CS2, CS3, CS4, CS5) den Codiergrad 1 vorgibt; und/oder
wobei jede beliebige nxn Teilmatrix derCodiermatrix invertierbar ist.

4. Transceiver gemäß einem der vorherigen Ansprüche, wobei eine Anzahl k an n codierten Segmente (CSO, CS1, CS2, CS3, CS4, CS5) zur Decodierung der n Source-Segmente (S0, S1, S2) genügt, wenn die Anzahl k zumindest gleich oder größer einer Anzahl n der Source-Segmente (S0, S1, S2) ist.

5. Transceiver gemäß einem der vorherigen Ansprüche, wobei die Mehrzahl der Cycle (C1, C2) jeweils zumindest einen ersten und einen zweiten Subcycle (SC1, SC2, SC3) umfassen, die mit unterschiedlichen Frequenzen oder zeitgleich mit unterschiedlichen Frequenzen übertragen werden; und/oder
wobei pro Subcycle (SC1, SC2, SC3) ein oder mehrere PHY-Pakete übertragen werden, oder wobei pro Subcycle (SC1, SC2, SC3) ein oder mehrere PHY-Pakete in unterschiedlichen Frequenzen übertragen werden.

6. Transceiver gemäß Anspruch 5, wobei die unterschiedlichen Frequenzen ein Frequenzhoppingmuster über mehrere Cycle (C1, C2) und/oder pro Cycle (C1, C2) und/oder pro Subcycle (SC1, SC2, SC3) bilden; und/oder
wobei das Frequenzhoppingmuster vordefiniert ist.

7. Transceiver gemäß einem der vorherigen Ansprüche, wobei ein PHY-Paket über mehrere Slots (SL1, SL2, SL3, SL4, SL5, SL6, SL7, SL8) oder über mehrere Slots (SL1, SL2, SL3, SL4, SL5, SL6, SL7, SL8) gleicher Frequenz übertragen wird; und/oder
wobei mehrere PHY-Pakete in einem Subcycle (SC1, SC2, SC3) übertragen werden; und/oder
wobei gemäß der Codiervorschrift in dem ersten Subcycle (SC1, SC2, SC3) des ersten Cycles (C1, C2) ein erstes Source-Segment (S0, S1, S2) der mehreren Source-Segmente (S0, S1, S2) übertragen wird und wobei gemäß der Codiervorschrift in dem zweiten Subcycle des ersten Cycles (C1, C2) ein Inhalt eines zweiten Source-Segments (S0, S1, S2) der mehreren Source-Segmente (S0, S1, S2) übertragen wird.

8. Transceiver gemäß Anspruch 7, wobei eine Kombination des ersten Source-Segments (S0, S1, S2) und des zweiten Source-Segments (S0, S1, S2) in einen zweiten oder folgenden dritten Subcycle (SC1, SC2, SC3) eines ersten Cycles (C1, C2) der Mehrzahl der Cycle (C1, C2) oder in einem Subcycle (SC1, SC2, SC3) des zweiten Cycles (C1, C2) der Mehrzahl der Cycle (C1, C2) als eines oder mehrere der codierten Segmente (CSO, CS1, CS2, CS3, CS4, CS5) übertragen oder wiederholt übertragen wird; und/oder
wobei die Codiervorschrift einen Gewichtungsfaktor vorgibt.

9. Transceiver gemäß einem der vorherigen Ansprüche, wobei in jedem Cycle (C1, C2) und/oder in jedem Subcycle (SC1, SC2, SC3) ein Bereich für Steuerungsbefehle, insbesondere für ChannelCode-Steuerbefehle, vorgesehen ist und wobei eine Signalisierung der Übertragung von dem ersten und zweiten der codierten Segmente (CSO, CS1, CS2, CS3, CS4, CS5) in dem ersten Subcycle (SC1, SC2, SC3) und/oder des ersten und zweiten der codierten Segmente (CSO, CS1, CS2, CS3, CS4, CS5) in einem Subcycle (SC1, SC2, SC3) in dem Bereich für Steuerungsbefehle, insbesondere einem leeren Feld, in dem Bereich für Steuerungsbefehle erfolgt.

10. Transceiver gemäß einem der vorherigen Ansprüche, wobei die Signalisierung der Übertragung von dem ersten und zweiten der codierten Segmente (CSO, CS1, CS2, CS3, CS4, CS5) in dem ersten Subcycle (SC1, SC2, SC3) und/oder der ersten und zweiten codierten Segmente in einem Subcycle (SC1, SC2, SC3) über eine Checksumme, einen CRC-Wert und/oder einen CRC-32-Wert erfolgt oder die Signalisierung der Übertragung von dem ersten und zweiten der codierten Segmente (CSO, CS1, CS2, CS3, CS4, CS5) in dem ersten Subcycle (SC1, SC2, SC3) und/oder des ersten und zweiten codierten Segmente (CSO, CS1, CS2, CS3, CS4, CS5) über eine Checksummen eines jeweiligen Subcycles (SC1, SC2, SC3) oder eines für eine bestimmte Übertragung definierten Bereichs eines Subcycles (SC1, SC2, SC3) erfolgt; und/oder
wobei eine Checksumme, ein CRC-Wert und/oder ein CRC-32-Wert mittels einer logischen Funktion, insbesondere einer XOR-Funktion mit einer ID des initialen Senders (16) kombiniert ist.

11. Transceiver gemäß Anspruch 10, wobei der Transceiver ausgebildet ist, eine Flusskontrolle in Abhängigkeit von der Signalisierung in einem Standardmodus oder einem erweiterten Modus zur Übertragung der codierten Segmente (CSO, CS1, CS2, CS3, CS4, CS5) zu aktivieren; und/oder
wobei der Transceiver ausgebildet ist, jeden Subcycle (SC1, SC2, SC3) und/oder jeden Cycle (C1, C2) mit einer anderen Frequenz entsprechend eines Frequenzhoppingmuster zu übertragen; und/oder
wobei in jedem Subcycle (SC1, SC2, SC3) ein oder mehrere Downlink-Pakete oder multigecastete Downlink-Pakete übertragen werden; und/oder
wobei in jedem Subcycle (SC1, SC2, SC3) ein oder mehrere oder maximal acht Uplink-Pakete übertragen werden.

12. Sensor- und/oder Aktorknoten umfassend einen Transceiver gemäß einem der vorherigen Ansprüche, der ausgebildet ist, codierte Segmente (CSO, CS1, CS2, CS3, CS4, CS5) als Uplink in einem für den Knoten zugewiesenen Uplink-Bereich der jeweiligen Subcycle (SC1, SC2, SC3) zu übertragen.

13. Masterknoten mit einem Transceiver gemäß einem der vorherigen Ansprüche, der ausgebildet ist, codierte Segmente (CSO, CS1, CS2, CS3, CS4, CS5) aus dem Uplink zu empfangen und/oder ein Paket im Downlink zu senden.

14. Weiterer Transceiver, der ausgebildet ist, um mindestens ein Source-Paket (12), das gesplittet und codiert ist, zu empfangen, mit folgenden Merkmalen:
Empfänger, der ausgebildet ist, mehrere PHY-Pakete zu empfangen, wobei jedes PHY-Paket ein codiertes Segmente (CSO, CS1, CS2, CS3, CS4, CS5) umfasst und mittels einer Mehrzahl von Cyclen (C1, C2) mit jeweils einer Mehrzahl an Subcyclen (SC1, SC2, SC3) übertragen wird, wobei jeder Subcycle (SC1, SC2, SC3) mehrere Slots (SL1, SL2, SL3, SL4, SL5, SL6, SL7, SL8) aufweist;
einem Decoder der ausgebildet ist, die codierten Segmente (CSO, CS1, CS2, CS3, CS4, CS5) zu decodieren, um Source-Segmente (S0, S1, S2) zu erhalten;
einem Kombinierer, der ausgebildet ist, die Source-Segmente (S0, S1, S2) zu mindestens einem Source-Paket (12) zusammenzufügen;
wobei der Decoder ausgebildet ist, das Decodieren durchzuführen, sobald eine Anzahl k an codierten Segmente (CSO, CS1, CS2, CS3, CS4, CS5) empfangen ist, wobei die Anzahl k zumindest einer Anzahl n der Source-Segmente (S0, S1, S2) entspricht.

15. Weiterer Transceiver gemäß Anspruch 14, wobei der Decoder zur Decodierung eine Codiermatrix und/oder aus der Codiermatrix ableitbare Teilmatrizen nutzt; und/oder
wobei der Decoder ausgebildet ist, eine Codiermatrix oder Teilmatrizen zur Decodierung vorzuhalten; und/oder
wobei der Decoder ausgebildet ist, inverse Matrizen oder Teilmatrizen für jeden Empfangsfall zu berechnen und vorzuhalten; und/oder
wobei der Decoder ausgebildet ist, eine Anzahl der zu nutzenden vorzuhaltenden inversen Matrizen oder Teilmatrizen systematisch zu reduzieren oder zu reduzieren; oder
wobei der Decoder ausgebildet ist, eine Anzahl der zu nutzenden vorzuhaltenden inversen Matrizen oder Teilmatrizen systematisch mit zunehmender Anzahl der empfangenen und/oder nicht-empfangenen PHY-Paketen zu reduzieren.

16. Weiterer Transceiver gemäß Anspruch 15, wobei das Reduzieren durch Ausschluss von den inversen Matrizen oder Teilmatrizen, die einem bestimmten PHY-Paket zugeordnet sind, erfolgt, wenn das bestimmte PHY-Paket nicht empfangen ist, oder durch Verwendung von den inversen Matrizen oder Teilmatrizen, die einem bestimmten PHY-Paket zugeordnet sind, erfolgt, wenn das bestimmte PHY-Paket empfangen ist.

17. Weiterer Transceiver gemäß einem der Ansprüche 14-16, wobei der Decoder ausgebildet ist, um ein partielles Decodieren basierend auf bereits erhaltenen codierten Paketen unter Verwendung der vorgehaltenen und/ oder vorgehaltenen inversen Matrizen oder reduzierten Teilmatrizen durchzuführen; und/oder
wobei Reduzieren und/oder partielles Decodieren schrittweise während des Empfangens in Abhängigkeit von den erhaltenen und nicht erhaltenen codierten Paketen erfolgt.

18. Verfahren zum Betreiben eines Transceivers gemäß einem der Ansprüche 1 bis 11, mit folgenden Schritten:
gesplittetes und codiertes Übertragen von mindestens einem Source-Paket (12), mit folgenden Unterschritten:
Aufteilen des mindestens einen Source-Pakets (12) in eine Mehrzahl von Source-Segmenten (S0, S1, S2);
Codieren der Mehrzahl von Source-Segmenten (S0, S1, S2) per Codiervorschrift, um codierte Segmente (CSO, CS1, CS2, CS3, CS4, CS5) zu erhalten;
Übertragen der codierten Segmente (CSO, CS1, CS2, CS3, CS4, CS5) als PHY-Pakete mittels mehreren Cyclen (C1, C2) mit jeweils mehreren Subcyclen (SC1, SC2, SC3), wobei jeder Subcycle (SC1, SC2, SC3) mehrere Slots (SL1, SL2, SL3, SL4, SL5, SL6, SL7, SL8) aufweist;
wobei die Codiervorschrift ein Übermitteln der Mehrzahl von Source-Segmente (S0, S1, S2) mittels Vorwärts-Fehler-Korrektur vorgibt und wobei die Codiervorschrift eine Reihenfolge derart vorgibt, dass ein Codiergrad der codierten Segmente (CSO, CS1, CS2, CS3, CS4, CS5), die im letzten PHY-Paket übertragen werden, reduziert oder auf Codiergrad 1 reduziert ist.

19. Verfahren zum Betreiben eines Transceivers gemäß einem der Ansprüche 14 bis 17, mit folgenden Merkmalen:
Empfangen mehrerer PHY-Pakete, wobei jedes PHY-Paket ein codiertes Segmente (CSO, CS1, CS2, CS3, CS4, CS5) umfasst und mittels einer Mehrzahl von Cyclen (C1, C2) mit jeweils einer Mehrzahl an Subcyclen (SC1, SC2, SC3) übertragen wird, wobei jeder Subcycle (SC1, SC2, SC3) mehrere Slots (SL1, SL2, SL3, SL4, SL5, SL6, SL7, SL8) aufweist;
Decodieren der codierten Segmente (CSO, CS1, CS2, CS3, CS4, CS5), um Source-Segmente (S0, S1, S2) zu erhalten;
Zusammenfügen der Source-Segmente (S0, S1, S2) zu mindestens einem Source Packet;
wobei das Decodieren erfolgt, sobald eine Anzahl k an codierten Segmente (CSO, CS1, CS2, CS3, CS4, CS5) empfangen ist, wobei die Anzahl k zumindest einer Anzahl n der Source-Segmente (S0, S1, S2) entspricht.

20. Computerprogramm zur Durchführung des Verfahrens nach Anspruch 18 oder 19.
